# EUROPÄISCHE PATENTSCHRIFT

(11) **EP 2 962 250 B1**
(45) Veröffentlichungstag und Bekanntmachung des Hinweises auf die Patenterteilung: **04.04.2018**
(21) Anmeldenummer: 14705324.3
(22) Anmeldetag: 14.02.2014
(51) Int. Cl.: G06K 9/00, G06K 9/20, G06T 7/174

(54) **VORRICHTUNG ZUR ERFASSUNG PERSONENSPEZIFISCHER DATEN**
DEVICE FOR CAPTURING PERSON-SPECIFIC DATA
DISPOSITIF PERMETTANT D'ACQUÉRIR DES DONNÉES PERSONNELLES

(30) Priorität: 28.02.2013 DE 102013203433
(43) Veröffentlichungstag der Anmeldung: 06.01.2016
(73) Patentinhaber: Bundesdruckerei GmbH, 10969 Berlin (DE)
(72) Erfinder: BLUDAU, Alexander, 10179 Berlin (DE); LÜTH, Gerhard, 13129 Berlin (DE); DÜMCHEN, Wolfgang, 16831 Rheinsberg (DE)
(74) Vertreter: Richardt Patentanwälte PartG mbB
(86) Internationale Anmeldenummer: PCT/EP2014/052963
(87) Internationale Veröffentlichungsnummer: WO 2014/131635

(56) Entgegenhaltungen:
- WO-A1-2005/050508
- WO-A1-2013/010786
- JP-A- 2007 025 758
- US-A1- 2006 210 124
- LIU Z ET AL: "Automatic segmentation of focused objects from images with low depth of field", PATTERN RECOGNITION LETTERS, ELSEVIER, AMSTERDAM, NL, Bd. 31, Nr. 7, 1. Mai 2010 (2010-05-01), Seiten 572-581, XP026952730, ISSN: 0167-8655 [gefunden am 2009-11-27]
- NORIMATSU Y ET AL: "Detection of the, gaze direction using the time-varying image processing", INTELLIGENT TRANSPORTATION SYSTEMS, 2003. PROCEEDINGS. 2003 IEEE OCT. 12-15, 2003, PISCATAWAY, NJ, USA,IEEE, Bd. 1, 12. Oktober 2003 (2003-10-12), Seiten 74-79, XP010673864, DOI: 10.1109/ITSC.2003.1251924 ISBN: 978-0-7803-8125-4

## Beschreibung

Die Erfindung betrifft eine Vorrichtung zur Erfassung personenspezifischer Daten, ein Verfahren zur Erfassung personenspezifischer Daten und ein Computerprogrammprodukt.
Ausweisdokumente wie beispielsweise Personalausweise müssen personalisiert werden. Die zur Personalisierung notwendigen Daten wie Name und Anschrift der Person, welcher der Ausweis zugeordnet wird, müssen von Hand durch einen entsprechenden Behördenmitarbeiter erfasst werden. Außerdem lässt üblicherweise die den Ausweis beantragende Person die für den Ausweis notwendigen Passbilder bei einem Fotografen erstellen und übergibt diese Bilder der den Ausweis ausstellenden Behörde oder Ausweisstelle. Die Ausstellung eines Ausweisdokumentes ist dabei sehr aufwendig und kostenintensiv, sowohl für den Ausweisempfänger als auch für die Ausweisaussteller.

Beispielsweise offenbart die EP 1 563 452 B1 ein Herstellungsverfahren für eine ID-Karte oder Ähnliches und eine Anordnung für die Herstellung einer derartigen Karte.

Die WO 2013/010786 A1 zeigt eine Vorrichtung zur Erfassung biometrischer Merkmale eines Gesichts einer Person, mit einer Kamera und einem semintransparenten Spiegel zwischen der Kamera und der Person.

Die US 2006/0210124 A1 zeigt eine Vorrichtung und ein Verfahren um ein Gesicht einer Person einfach und genau zu erfassen, wobei ein beleuchtetes und ein unbeleuchtetes Bild des Gesichts aufgenommen werden und ein Differenzbild dieser zwei Bilder erstellt wird.

In der JP 2007 025758 A wird aus einem unbeleuchteten und einem mit Infrarotlicht beleuchteten Bild ein Differenzbild erzeugt und dieses Differenzbild als Maske zum Freischneiden eines Passbildes verwendet.

Der Erfindung liegt die Aufgabe zugrunde, eine Vorrichtung zur Erfassung von personenspezifischer Daten einer Person, ein Verfahren zur Erfassung personenspezifischer Daten einer Person, sowie ein Computerprogrammprodukt zu schaffen.

Die der Erfindung zugrunde liegenden Aufgaben werden durch die Merkmale der unabhängigen Patentansprüche gelöst. Bevorzugte Ausführungsformen der Erfindung sind in den abhängigen Patentansprüchen angegeben.

Es wird eine vorzugsweise freistehende Vorrichtung zur Erfassung personenspezifischer Daten einer Person angegeben, wobei die personenspezifischen Daten ein Gesichtsbild der Person umfassen, wobei die Vorrichtung eine Kamera zur Aufnah me des Gesichtsbild der Person, eine Beleuchtungseinrichtung und einen semi-transparenten Spiegel aufweist. Der semi-transparente Spiegel ist zwischen der Person und der Kamera angeordnet, wobei der semi-transparente Spiegel so ausgerichtet ist, dass auf der der Person zugewandten Seite des semi-transparenten Spiegels der Strahlengang von auf den semi-transparenten Spiegel einfallenden Lichts parallel ist zum Strahlengang des vom semi-transparenten Spiegel zurück reflektierten Teil diesen Lichts. Außerdem dient die Beleuchtungseinrichtung einer frontseitigen Beleuchtung der Person, also einer Beleuchtung des Teils der Person, welcher der Kamera zugewandt ist. Die Vorrichtung weist ferner eine Steuerungseinheit auf zur Durchführung einer Bilderfassung umfassend folgende Schritte:
- Erzeugung von Licht durch die Beleuchtungseinrichtung zur Beleuchtung des Gesichts der Person und während der Beleuchtung Erfassen eines ersten Bildes des Gesichts der Person durch die Kamera,
- Erfassen eines zweiten Bildes des Gesichts der Person durch die Kamera ohne die Erzeugung des Lichts,
- Bildung eines ersten Differenzbildes des ersten Bildes und des zweiten Bildes, wobei im ersten Differenzbild das Gesicht der Person vom Hintergrund freigestellt ist, wobei die personenspezifischen Daten das erste Differenzbild als das Gesichtsbild umfassen.

Ausführungsformen der Erfindung könnten den Vorteil haben, dass durch die Vorrichtung unabhängig von ihrem Aufstellungsort, dem verwendeten Bildhintergrund und ohne die Notwendigkeit eines professionellen Fotografen Gesichtsbilder einer Person erfasst werden können, welche frei sind von einem Hintergrund, vor welchem das Bild aufgenommen wurde. Ein Gesichtsbild, welches ein Gesicht einer Person darstellt, welches vom Hintergrund freigestellt ist, könnte den Vorteil haben, dass insbesondere bei der Erstellung von Ausweisdokumenten auf dem Ausweisdokument befindliche Sicherheitsmerkmale bis direkt an die Konturen des Gesichts der Person herangeführt werden können. Würde nämlich das Ausweisdokument ein Gesichtsbild mitsamt Hintergrund tragen, könnten entsprechende Sicherheitsmerkmale nicht so dicht an das eigentliche Gesicht der Person herangeführt werden. Als "Bild" dient nämlich in diesem Fall das gesamte Bild samt gegebenenfalls auch einfarbigem oder neutralem Hintergrund, wobei je nach Gesichtsform dieser Hintergrund größer oder kleiner ausfallen kann.

Sollen nun automatisiert Sicherheitsmerkmale in das Ausweisdokument mit eingebracht werden, kann nur sehr schwer automatisiert ein Sicherheitsmerkmal bis an die Gesichtskonturen herangeführt werden, da immer die Gefahr besteht, dass das Sicherheitsmerkmal dann Teile des Gesichts überdeckt und daher das Gesicht unkenntlich macht. Gemäß der obig beschriebenen Bilderfassung hingegen ergibt sich vollautomatisch ein vom Hintergrund freigestelltes Gesicht der Person, welches in automatisierter Weise weiterverarbeitet werden kann. Beim Herstellen des Ausweisdokuments ist also von vorne herein bekannt, an welcher Stelle die Gesichtskonturen beginnen und bis zu welcher Stelle die Sicherheitsmerkmale an die Gesichtskonturen herangeführt werden können.

Bei der Bilderfassung wird sowohl bei der Erfassung des ersten Bildes als auch bei der Erfassung des zweiten Bildes der Hintergrund eine identische oder nahezu identische Ausleuchtung aufweisen. Die zur Erfassung des ersten Bildes verwendete Beleuchtung des Gesichts wird nämlich nur so ausgestaltet sein, dass das Gesicht optimal ausgeleuchtet ist. Der beliebig vorhandene Hintergrund ist dadurch nicht beeinflusst. Es ergibt sich also zwischen dem ersten und dem zweiten Bild der wesentliche Unterschied, dass einmal das Gesicht der Person hell erleuchtet und damit gut erkenntlich ist, und einmal das Gesicht der Person dunkler erscheint, da es unbeleuchtet ist. In beiden Fällen wird jedoch der Hintergrund in seiner Helligkeit identisch oder nahezu identisch sein. Diese Unterschiede ermöglichen es, bei der Bildung des ersten Differenzbildes den Hintergrund zu entfernen und damit das gesamte Gesicht der Person vom Hintergrund freizustellen.

Die Verwendung eines semi-transparenten Spiegels zwischen der Person und der Kamera in der obig beschriebenen Weise könnte den Vorteil haben, dass automatisch eine für biometrische Bilder optimierte Ausrichtung des zu erfassenden Gesichts der Person und der Kamera gegeben ist. Die Person wird automatisch in "biometrisch richtiger Weise" in die Kamera schauen, da sich die Person selbst als Spiegelbild im semi-transparenten Spiegel sieht. Außerdem wird hierdurch die Person automatisch die Kopfneigung nach links oder rechts, bzw. oben oder unten so anpassen, dass eine natürliche Blickrichtung in Richtung der Kamera gegeben ist.

Bei dem erzeugten Licht handelt es sich um weißes Licht, wobei die Steuerungseinheit ferner ausgebildet ist zum:
- Steuern der Beleuchtungseinrichtung zur Erzeugung von farbigem oder infrarotem Licht durch die Beleuchtungseinrichtung zur Beleuchtung des Gesichts der Person und Steuern der Kamera, um während der Beleuchtung ein drittes Bild des Gesichts der Person durch die Kamera zu erfassen,
- Erfassen eines vierten Bildes des Gesichts der Person durch die Kamera ohne die Erzeugung des Lichts,
- Bilden eines zweiten Differenzbildes des dritten Bildes und des vierten Bildes, wobei im zweiten Differenzbild das Gesicht der Person vom Hintergrund freigestellt ist, und Berechnung der äußeren Konturen des Gesichts aus dem zweiten Differenzbild,
- Korrektur des ersten Differenzbildes mit den aus dem zweiten Differenzbild berechneten äußeren Konturen.

Es sei an dieser Stelle angemerkt, dass das vierte Bild mit dem zweiten Bild identisch sein kann, d.h. dass in diesem Fall lediglich einmalig ein zweites Bild des Gesichts der Person durch die Kamera ohne die Erzeugung des Lichts erfasst wird und dieses zweite Bild dann bei der Bildung des zweiten Differenzbildes als das vierte Bild herangezogen wird.

Die Verwendung von farbigem Licht zur Berechnung der äußeren Konturen des Gesichts könnte den Vorteil haben, dass aufgrund der Verwendung einer Farbe, wie beispielsweise gelb, blau oder rot ein sehr intensiver Unterschied des in dieser Farbe erleuchteten Gesichts zur Umgebung, d.h. zum Hintergrund, geschaffen wird. Während beispielsweise vor einem grauen Hintergrund bei weißer Beleuchtung graue Haare ein eher schlechten Kontrast abgeben, ist es durch die Verwendung einer Farbe wie gelb möglich, auch in solchen Situationen einzelnen Gesichtspartien inklusive der Haare eine sich deutlich vom Hintergrund abhebende Farbgebung zu verleihen. Diese Farbgebung kann daraufhin durch die Kamera erfasst werden und dazu verwendet werden, die äußeren Konturen des Gesichts, d.h. der Hautpartien inklusive der Haare, exakt zu bestimmen.

Es sei an dieser Stelle angemerkt, dass die Berechnung der äußeren Konturen mehrmals durchgeführt werden kann für unterschiedlich farbiges Licht, mit welchem das Gesicht der Person beleuchtet wurde. Es ist also durchaus möglich, das Gesicht der Person nacheinander in unterschiedlichen Farben zu beleuchten und dann die Berechnung der äußeren Konturen unter Verwendung eines der so erfassten farbigen Bilder oder aller erfassten farbigen Bilder durchzuführen. Gemäß einer Ausführungsform erfolgt die Erfassung des dritten Bildes des Gesichts der Person gefiltert entsprechend der Verwendung des farbigen oder infraroten Lichts. Dies könnte den Vorteil haben, die Bestimmung der äußeren Gesichtskontur zu vereinfachen.

Die Erzeugung von infrarotem Licht und eine anschließende vorzugsweise Erfassung des dritten Bildes des Gesichts der Person im Infrarotbereich könnte den Vorteil haben, dass hierdurch die Kontraste des Gesichts in verstärkter Form sichtbar werden. Dies unterstützt in optimierender Weise die Berechnung der äußeren Konturen des Gesichts.

Nach einer Ausführungsform der Erfindung werden zur Bildung des Differenzbildes Helligkeitsunterschiede der zur Bildung des Differenzbildes verwendeten Pixel verwendet, wobei alle Pixel dem Hintergrund zugeordnet werden, deren Helligkeitsunterschied unter einem vorbestimmten Schwellwert liegen. Im Falle des ersten Differenzbildes geht es also um die Helligkeitsunterschiede der Pixel an denselben Positionen des ersten und zweiten Bildes, wohingegen es bei dem zweiten Differenzbild um Helligkeitsunterschiede der verwendeten Pixel an denselben Positionen des dritten und vierten Bildes geht. Wie bereits oben erwähnt kann davon ausgegangen werden, dass im beleuchteten und unbeleuchteten Zustand des Gesichts der Hintergrund nahezu dieselbe Helligkeit aufweist, so dass beim Hintergrund keine Helligkeitsunterschiede zwischen dem ersten und zweiten Bild sichtbar sein werden. Alle Bereiche, deren Helligkeitsunterschiede unter einem vorbestimmten maximalen Schwellwert liegen, können dann als Hintergrund des ersten Differenzbildes entfernt werden.

Nach einer Ausführungsform der Erfindung weist die Kamera ein Objektiv auf, wobei das Objektiv dazu ausgebildet ist, ausschließlich das Gesicht der Person scharf zu erfassen und den Hintergrund unscharf zu erfassen, wobei die Steuerungseinheit ferner ausgebildet ist zum Berechnen der äußeren Konturen des Gesichts aus der Schärfedifferenz des Gesichts der Person und des Hintergrunds und zur Korrektur des ersten Differenzbildes mit den berechneten äußeren Konturen.

Beispielsweise kann vorgesehen sein, dass die Schärfentiefe des Objektivs so gewählt ist, dass ausschließlich das Gesicht der Person Details zeigt, wohingegen alle anderen Objekte, welche weitere als ein Drittel der Entfernung zwischen Kamera und Fokuspunkt der Kamera vom Fokuspunkt entfernt sind, als deutlich unscharf zu bezeichnen sind. Die Anzahl der auflösbaren Linienpaare im Abstand von dem besagten Drittel der Entfernung zwischen Kamera und Fokuspunkt sollte demnach höchstens 20 Prozent, vorzugsweise 10 Prozent der Anzahl an Linienpaaren pro Millimeter betragen, welche im Fokuspunkt durch die Kamera auflösbar sind.

Durch die Berechnung der äußeren Konturen des Gesichts aus der Schärfedifferenz des Gesichts der Person und des Hintergrunds ist eine Alternative oder zusätzliche Möglichkeit geschaffen, in möglichst genauer Weise eine Korrektur des ersten Differenzbildes mit den berechneten äußeren Konturen vorzunehmen.

Nach einer weiteren Ausführungsform der Erfindung ist die Beleuchtungseinrichtung für eine Beleuchtung der Person mit polarisiertem Licht ausgebildet, wobei die Kamera einen Polarisationsfilter aufweist, wobei die Polarisationsrichtung des polarisierten Lichts und die Polarisationsrichtung des durch den Polarisationsfilter in die Kamera transmittierten Lichts um 90° zu einander verdreht sind.

Dies könnte den Vorteil haben, dass ungewollte Spiegelungen, beispielsweise in Brillengläsern der beleuchteten Person stark minimiert werden. Dadurch ist es in automatisierter Weise möglich, qualitativ hochwertige Gesichtsbilder einer Person zu erfassen, welche außerdem auch den Standards an biometrische Bilder genügen.

Nach einer Ausführungsform der Erfindung ist die Steuerungseinheit ferner ausgebildet zur Analyse des Gesichtsbildes der Person, wobei die Analyse eine Bestimmung der Kopfhaltung und/oder der Augenhaltung umfasst, wobei die Steuerungseinheit ferner ausgebildet ist, im Falle dessen die Kopfhaltung und/oder Augenhaltung vordefinierten Kriterien nicht entspricht, das Gesichtsbild der Person automatisch zu verwerfen.

Vorzugsweise ist die Kamera dazu ausgebildet, eine Vielzahl von Bildern hintereinander in einem Videostrom zu erfassen, wobei die Steuerungseinheit ferner ausgebildet ist, bei der Bildung des ersten Differenzbildes und/oder des zweiten Differenzbildes nur die Bilder des Videostroms zu verwenden, welchen vordefinierten Qualitätskriterien entsprechen. Die Qualitätskriterien können zum Beispiel eine vordefinierte räumliche Position der Augenpartie der Person und/oder eine maximal zulässige Bewegungsunschärfe der Person und/oder eine vordefinierte Größe des Gesichts der Person auf den Bildern umfassen.

Die Verwendung eines Videostroms könnte den Vorteil haben, dass in kürzester Zeit eine Vielzahl von Bildern erfasst werden kann. Damit ist die Wahrscheinlichkeit beträchtlich erhöht, dass zumindest eines der in dem kurzen Zeitraum erfassten Bilder eine hohe Qualität hat, um schließlich zur Bildung des ersten Differenzbildes herangezogen zu werden. Außerdem wird die durch die Kamera erfasste Person davon entlastet, über einen langen Zeitraum kontinuierlich in die Kamera zu schauen, was üblicherweise zu verzerrten und unnatürlichen Gesichtsausdrücken führen kann.

Außerdem kann die Verwendung eines Videostroms den Vorteil haben, dass im Falle einer Bewegung der Person der Augenblick abgewartet werden kann, an dem das Gesicht der Person in optimaler Weise zur Kamera ausgerichtet ist. Ist die Bewegung der Person dabei ausreichend langsam, wird die vorhandene Bewegungsunschärfe vernachlässigbar sein oder sie ist gegebenenfalls überhaupt nicht vorhanden. Da die Person sich auch auf die Kamera zu oder von der Kamera wegbewegen kann, ist die vordefinierte Größe des Gesichts der Person gegebenenfalls relevant, da auch hier das Erreichen einer optimale Entfernung zwischen Gesicht der Person und Kamera abgewartet werden kann, so dass die verwendete Beleuchtungseinrichtung das Gesicht der Person gleichmäßig ausleuchten kann.

Nach einer Ausführungsform der Erfindung ist die Kamera durch eine Antriebseinheit höhenverstellbar, wobei die Steuerungseinheit ferner ausgebildet ist,
- die räumliche Position der Augenpartie der Person relativ zur Position der Kamera zu detektieren und
- im Falle dessen, dass sich die räumliche Position der Augenpartie nicht in einem vordefinierten Bereich relativ zur Position der Kamera befindet, die Antriebseinheit anzusteuern, um automatisch die Höhe der Kamera über die Antriebseinheit zu fahren, so dass sich die räumliche Position der Augenpartie in dem vordefinierten Bereich relativ zur Position der Kamera befindet.

Dadurch könnte gewährleistet sein, dass immer in optimaler Weise das Gesicht der Person zur Kamera ausgerichtet ist. Die Person wird also niemals von oben in die Kamera oder von unten in die Kamera schauen, sondern die Kamera wird immer automatisch auf einer insbesondere zur Erfassung von biometrischen Bildern richtigen Höhe bezüglich der Augenpartie der Person angeordnet sein. Auch dies könnte die Verwendung der Vorrichtung in autonomer Form und insbesondere ohne entsprechendes Bedienpersonal prädestinieren. Die Vorrichtung wird automatisch Bilder in optimierter Weise aufnehmen können.

Nach einer Ausführungsform der Erfindung werden die Detektion der räumlichen Position der Augenpartie und das Verfahren der Kamera über die Antriebseinheit kontinuierlich durchgeführt. Dadurch können auch Bewegungen einer Person in vertikaler Richtung gesehen über die Antriebseinheit ausgeglichen werden.

Nach einer Ausführungsform der Erfindung ist die Kamera ferner zur Erfassung von infrarotem Licht ausgebildet, wobei die Steuerungseinheit ferner ausgebildet ist zum Erfassen eines fünften Bildes des Gesichts der Person durch die Kamera, ohne die Beleuchtung des Gesichts der Person durch die Beleuchtungseinrichtung, wobei die Erfassung des fünften Bildes im infrarotem Wellenlängenbereich erfolgt. Ferner ist die Steuerungseinheit dazu ausgebildet, die äußeren Konturen des Gesichts aus dem fünften Bild zu berechnen und die Korrektur des ersten Differenzbildes mit den aus den fünften Bild berechneten äußeren Konturen durchzuführen.

Die Verwendung des infrarotem Wellenlängenbereichs bei der Erfassung des fünften Bildes des Gesichts der Person könnte den Vorteil haben, dass hier in besonders deutlicher Weise Unterschiede zwischen den warmen Körperpartien der Person, welche Infrarotlicht ausstrahlen, und den dazu relativ kalten Bereichen des umgebenden Hintergrunds detektiert werden können. Dies ermöglicht in besonders präziser Weise die Berechnung der äußeren Konturen des Gesichts und damit die entsprechend präzise Korrektur des ersten Differenzbildes mit den aus den fünften Bild berechneten äußeren Konturen.

Nach einer Ausführungsform der Erfindung weist die Vorrichtung ein Lesegerät für ein Ausweisdokument der Person auf, wobei das Lesegerät dazu ausgebildet ist, im aktivierten Zustand Personalisierungsinformationen der Person aus dem Ausweis auszulesen, wobei die personenspezifischen Daten die Personalisierungsinformationen umfassen.

Beispielsweise könnte es sich bei dem besagten Ausweisdokument um einen Ausweis mit einer sogenannten eID-Funktion handeln. Die eID-Funktion eines Ausweises ermöglicht es, die von der Vorrichtung über das Lesegerät von dem Ausweisdokument angeforderten Personalisierungsinformationen mit einer persönlichen geheimen PIN freizugeben und zu übermitteln. Da ein entsprechender Ausweis mit eID-Funkion, insbesondere ein Personalausweis, durch eine zentrale Bundesstelle ausgegeben wurde und außerdem die Vorrichtung oder das Lesegerät ebenfalls von dieser zentralen Bundesstelle mit einem elektronischen Berechtigungszertifikat versehen wurde, ist es möglich, dass sich die Vorrichtung sicher sein kann, dass die das Ausweisdokument verwendende Person auch tatsächlich die Person ist, die sie vorgibt zu sein. Außerdem kann sich die das Ausweisdokument verwendende Person sicher sein, dass nur solche Daten aus dem Ausweisdokument ausgelesen werden, welche speziell für die Vorrichtung von der zentralen Bundesstelle als hierfür notwendig erachtet wurden.

Nach einer Ausführungsform der Erfindung umfasst die Vorrichtung ferner einen Fingerabdrucksensor, wobei der Fingerabdrucksensor dazu ausgebildet ist, im aktivierten Zustand einen Fingerabdruck der Person zu erfassen, wobei die personenspezifischen Daten den erfassten Fingerabdruck umfassen.

Nach einer Ausführungsform der Erfindung umfasst die Vorrichtung ferner einen Bedienpult, wobei das Bedienpult dazu ausgebildet ist, im aktivierten Zustand eine alphanumerische Dateneingabe der Person und/oder eine Eingabe einer Unterschrift der Person zu erfassen, wobei die personenspezifischen Daten die erfasste Dateneingabe und/oder Unterschrift umfassen. Beispielsweise handelt es sich bei der erfassten Dateneingabe um Name, Anschrift und Geburtsdatum der Person.

Durch das Bereitstellen der weiteren Inhalte bezüglich der personenspezifischen Daten ist es möglich, mit ein und demselben Terminal eine vollständige Erfassung aller relevanten personenspezifischen Daten durchzuführen, welche zur Erstellung eines Ausweisdokumentes notwendig sind. Vorzugsweise ist die Steuerungseinheit jedoch so ausgebildet, das Lesegerät und/oder der Fingerabdrucksensor und/oder das Bedienpult ausschließlich und höchstens so lange in den aktivierten Zustand zu versetzen, solange ein Gesichtsbild der Person durch die Kamera erfasst wird. Dadurch könnte verhindert werden, dass an der Dateneingabe verschiedene Personen beteiligt sind, so dass unter Umständen das Gesichtsbild der Person nicht zu dem erfassten Fingerabdruck oder den erfassten weiteren Eingaben der Person einschließlich der Unterschrift der Person passen. Es erfolgt also vorzugsweise eine kontinuierliche Überprüfung, ob die Person vor der Vorrichtung steht oder ob in der Zwischenzeit in irgendeiner Weise die Person wechselt, welche die Vorrichtung bedient.

Nach einer Ausführungsform der Erfindung umfasst die Vorrichtung ferner eine Netzwerkschnittstelle, wobei die Vorrichtung dazu ausgebildet ist, die personenspezifischen Daten an eine Einrichtung zum automatisierten Erzeugen des Ausweisdokumentes aus den personenspezifischen Daten oder an eine Einrichtung zum Verifizieren der personenspezifischen Daten zu übertragen. Bei der Einrichtung zum automatisierten Erzeugen des Ausweisdokuments könnte es sich beispielsweise um eine Vorrichtung zum Drucken des Ausweisdokuments handeln. In diesem Fall könnte ein Mitarbeiter einer Behörde oder einer Firma, welche das Ausweisdokument erstellt, lediglich noch in einem abschließenden Schritt stichprobenartig überprüfen, ob die auf dem Ausweisdokument enthaltenen Angaben wie Fingerabdruck, Gesichtsbild, Name usw. auch der Person zu zuordnen sind, für welche das Ausweisdokument erzeugt wurde.

Im Falle dessen die personenspezifischen Daten an eine Einrichtung zum Verifizieren der personenspezifischen Daten übertragen wird könnte es sich beispielsweise hier um einen Computer einer Behörde handeln. Hier begibt sich z.B. die das Ausweisdokument anfordernde Person zu der Behörde. Bei der Behörde wird vor Erzeugen eines entsprechenden Ausweisdokumentes stichprobenartig überprüft, ob die in den personenspezifischen Daten enthaltenden Angaben für die besagte Person richtig sind.

Nach einer Ausführungsform der Erfindung handelt es sich bei der Vorrichtung um einen freistehenden Automaten, wobei der Automat vorzugsweise frei von einer Rückwand ist, welche von der Kamera ausgesehen hinter dem Gesicht der zu erfassenden Person angeordnet ist. Beispielsweise handelt es sich hierbei um ein Standgerät mit einem Fuß und einem Bedienterminal, wobei das Gerät beliebig frei in einem Raum aufgestellt werden kann. Der Benutzer tritt an die Vorrichtung heran, ohne sich hierbei in eine entsprechende Kabine oder Ähnliches begeben zu müssen. Nichts desto trotz ist es möglich, mit der Vorrichtung qualitativ hochwertige und vor allen Dingen auch biometrischen Standards genügende Bilder eines Gesichts der Person zu erfassen.

Nach einer Ausführungsform der Erfindung ist die Beleuchtungseinrichtung um den semi-transparenten Spiegel herum angeordnet. Dies könnte eine besonders homogene Ausleuchtung des Gesichts der Person gewährleisten.

In einem weiteren Aspekt betrifft die Erfindung ein Verfahren zur Erfassung personenspezifischer Daten einer Person durch eine Vorrichtung, wobei die personenspezifischen Daten ein Gesichtsbild der Person umfassen, wobei die Vorrichtung eine Kamera zur Aufnahme des Gesichtsbildes der Person, eine Beleuchtungseinrichtung und einen semi-transparenten Spiegel aufweist, wobei der semi-transparente Spiegel zwischen der Person und der Kamera angeordnet ist, wobei der semi-transparente Spiegel so ausgerichtet ist, dass auf der der Person zugewandten Seite des semi-transparenten Spiegels der Strahlengang von auf den semi-transparenten Spiegel einfallenden Lichts parallel ist zum Strahlengang des vom semi-transparenten Spiegel zurück reflektierten Teil dieses Lichts, wobei die Beleuchtungseinrichtung für eine frontseitige Beleuchtung der Person ausgebildet ist, wobei das Verfahren umfasst:
- Erzeugung von weißem Licht durch die Beleuchtungseinrichtung zur Beleuchtung des Gesichts der Person und während der Beleuchtung Erfassen eines ersten Bildes des Gesichts der Person durch die Kamera,
- Erfassen eines zweiten Bildes des Gesichts der Person durch die Kamera ohne die Erzeugung des weißen Lichts,
- Bildung eines ersten Differenzbildes des ersten Bildes und des zweiten Bildes, wobei im ersten Differenzbild das Gesicht der Person vom Hintergrund freigestellt ist, wobei die personenspezifischen Daten das erste Differenzbild als das Gesichtsbiid umfassen,
- Steuern der Beleuchtungseinrichtung zur Erzeugung von farbigem oder infrarotem Licht durch die Beleuchtungseinrichtung zur Beleuchtung des Gesichts der Person, sowie Steuern der Kamera, um während der Beleuchtung ein drittes Bild des Gesichts der Person durch die Kamera zu erfassen,
- Erfassen eines vierten Bildes des Gesichts der Person durch die Kamera ohne die Erzeugung des farbigen oder infraroten Lichts,
- Bildung eines zweiten Differenzbildes des dritten Bildes und des vierten Bildes, wobei im zweiten Differenzbild das Gesicht der Person vom Hintergrund freigestellt ist, und Berechnung der äußeren Konturen des Gesichts aus dem zweiten Differenzbild,
- Korrektur des ersten Differenzbildes mit den aus dem zweiten Differenzbild berechneten äußeren Konturen.
In einem weiteren Aspekt betrifft die Erfindung ein Computerprogrammprodukt mit von einem Prozessor ausführbaren Instruktionen zur Durchführung der Verfahrensschritte wie obig beschrieben.
In einem weiteren Aspekt betrifft die Erfindung eine Signalfolge, die, wenn in einem Computer abgespeichert, eine Abfolge von Instruktionen darstellt, die, wenn auf diesem Computer ausgeführt, das zuvor geschilderte Verfahren ausführt.

Es sei angemerkt, dass die obig beschriebenen Ausführungsformen der Erfindung in beliebiger Weise miteinander kombiniert werden können, solange sich die kombinierten Ausführungsformen nicht gegenseitig ausschließen.

Im Folgenden werden bevorzugte Ausführungsformen der Erfindung anhand der Zeichnungen näher erläutert. Es zeigen:
- Figur 1: eine frontale Aufsicht auf eine Vorrichtung zur Erfassung personenspezifischer Daten einer Person,
- Figur 2: eine Seitenansicht der Vorrichtung der Figur 1,
- Figur 3: eine weitere Ansicht einer Vorrichtung zur Erfassung personenspezifischer Daten einer Person,
- Figur 4: ein Flussdiagramm eines Verfahrens zur Erfassung des Gesichtsbildes einer Person,
- Figur 5: ein Flussdiagramm eines Verfahrens zur Bilderfassung.

Im Folgenden werden einander ähnliche Elemente mit den gleichen Bezugszeichen gekennzeichnet.

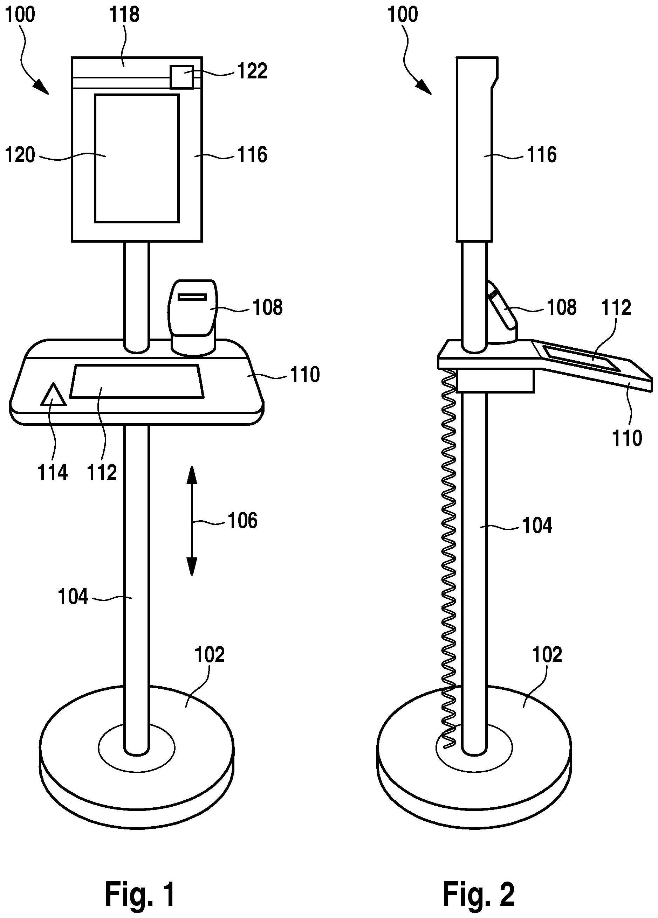

Die Figur zeigt eine schematische Ansicht einer freistehenden Vorrichtung 100 zur Erfassung personenspezifischer Daten einer Person. Die personenspezifischen Daten können dabei ein Gesichtsbild der Person umfassen, wobei die Vorrichtung eine Kamera zur Aufnahme des Gesichtsbilds der Person aufweist. Die Kamera befindet sich in Figur 1 in nicht ersichtlicher Weise hinter einem semi-transparenten Spiegel 120, welcher auf Kopfhöhe der besagten Personen angeordnet ist. Um den semi-transparenten Spiegel herum ist eine Beleuchtungseinrichtung 118 angeordnet, welche der Beleuchtung des Gesichts der Person dient. Der Bereich des semi-transparenten Spiegels 118, hinter welchem die Kamera angeordnet ist und der Beleuchtungseinrichtung 118 wird im Folgenden als Kopfteil 116 der Vorrichtung 100 bezeichnet.

Nebst dem Kopfteil 116 weist die Vorrichtung 100 ferner ein Bedienpult 110 mit einem berührungsempfindlichen Bildschirm 112 auf. Am Bedienpult 110 ist ein Fingerabdrucksensor 114 angeordnet, über welchen der Benutzer seine Fingerabdrücke an die Vorrichtung 100 übermitteln kann.

Ebenfalls am Bedienpult 110 ist ein Lesegerät 108 angeordnet, welches dazu ausgebildet ist, Personalisierungsinformationen der Person aus einem Ausweisdokument der Person auszulesen. Beispielsweise kann das Lesegerät 108 über eine Nahfeldkommunikationsschnittstelle mit dem Ausweisdokument kommunizieren. Über eine PIN-Pad des Lesegeräts 108 ist ein Benutzer des Ausweisdokuments außerdem in der Lage, eine PIN zur Nutzung der eID-Funktion des Ausweisdokuments in die Vorrichtung 100 einzugeben.

Das Kopfteil 116 ist zusammen mit dem Bedienpult 110 und den dort angeordneten Bedienelementen über eine Hubsäule 104 in vertikaler Richtung 106 verfahrbar. Die Hubsäule 104 selbst ist wiederum an einem Standfuß 102 angeordnet.

In der Figur 2 ist nochmals die Vorrichtung 100 in einer Seitenansicht gezeigt, wobei hier ersichtlich ist, dass das Bedienpult 110 leicht zum Benutzer hin geneigt ist, beispielsweise um 20°, um dem Benutzer entsprechende Eingaben und das Lesen eventuell auf dem berührungsempfindlichen Bildschirm 112 angezeigter Informationen zu erleichtern. Der berührungsempfindliche Bildschirm 112 ist dabei so eingebaut, dass dessen Oberfläche bündig mit der Oberfläche des Bedienpults abschließt und dadurch eine durchgängige Fläche entsteht.

In der Figur 1 ist ferner ersichtlich, dass am Kopfteil 116 ein Lautsprecher 122 angeordnet ist. Sowohl der Lautsprecher 122 als auch der berührungsempfindliche Bildschirm 112 können dazu verwendet werden, um einem Benutzer der Vorrichtung 100 zur Benutzung notwendige Instruktionen mitzuteilen. Dies kann beispielsweise eine Begrüßung des Benutzers, sowie eine Menüführung des Benutzers bis hin zur Aufforderung des Auflegen eines Zeigefingers auf den Fingerabdrucksensor 114 und/oder das Zuführen eines Ausweisdokuments zum Lesegerät 108 umfassen. Außerdem kann der Benutzer auch bei einer durchzuführenden Gesichtsbilderfassung durch die hinter dem semi-transparenten Spiegel 120 angeordneten Kamera dazu aufgefordert werden, seinen Kopf in einer insbesondere für die Erfassung biometrischer Bilder günstigen Weise zur Kamera zu richten. All dies geschieht vollkommen automatisiert, so dass hier bei der Verwendung der Vorrichtung 100 keinerlei weiteres Bedienpersonal oder Unterstützungspersonal notwendig ist.

Das Kopfteil 116 ist von einem kastenförmigen Kunststoffgehäuse umgeben, dessen dem Benutzer zugewandten Seite den semi-transparenten Spiegel 120 enthält. Dabei ist der semi-transparente Spiegel 120 so groß, dass ein Benutzer, der in einer Position vordem Bedienpult 110 steht, die beim Lesen vom berührungsempfindlichen Bildschirm 112 natürlich eingenommen wird, bei einem Blick in diesen Spiegel 120 etwa das aufzunehmende Portraitbild sieht.

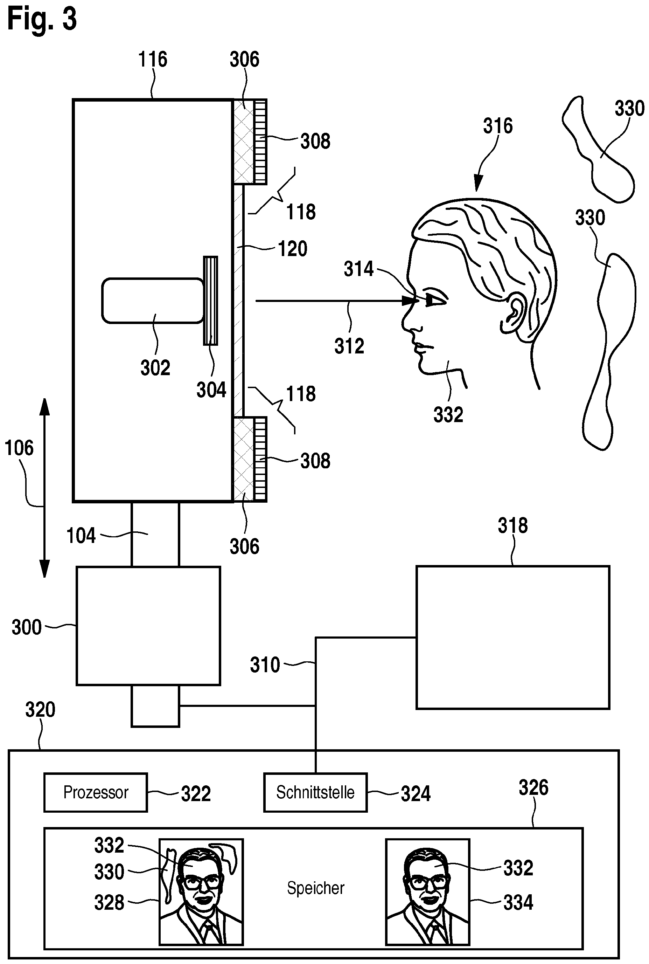

In der Figur 3 ist in einer Querschnittsansicht das Kopfteil 116 im Detail gezeigt. Ersichtlich ist nun die Kamera 302, welche im Kopfteil 116 angeordnet ist. Der semi-transparente Spiegel 120 ist zwischen der Person 316 und der Kamera 302 angeordnet, wobei die Ausrichtung des semi-transparenten Spiegels 120 so ist, dass die optische Achse der Kamera senkrecht auf der Oberfläche des Spiegels 120 steht. In anderen Worten ist der semi-transparente Spiegel 120 so ausgerichtet, dass auf der der Person 316 zugewandten Seite des Spiegels der Strahlengang von auf den semi-transparenten Spiegel anfallenden Lichts parallel zum Strahlengang des vom semi-transparenten Spiegel zurück reflektierten Teil diesen Lichts.

Das Kopfteil 116 ist über die Hubsäule 104 und einem der Hubsäule 104 zugeordneten Antrieb 300 in vertikaler Richtung 106 verstellbar. Die Höhenverstellung in Richtung 106 dient der automatischen Anpassung der vertikalen Position der Kamera 302 relativ zur Höhe der Augen 314 der Person 316. Während vorzugsweise die Vorrichtung 100 im Grundzustand, also noch bevor ein entsprechender Benutzer an die Vorrichtung herantritt, in etwa die Größe einer erwachsenen Person aufweist, kann sich nach Herantreten der Person über den Antrieb 300 die Vorrichtung 100 selbstständig auf die aktuelle Augenhöhe der Person einstellen. Die mit Bezugszeichen 112 gekennzeichnete horizontale Linie entspricht dabei der optischen Achse der Kamera 302, welche mit der Augenhöhe der Augen 314 zusammenfällt.

Der Spiegel 120 animiert die Person 316 in denselben hinein zu schauen, so dass die Person automatisch eine Kopfhaltung einnimmt, welche für sie in förderlicher Weise scheint.

Um nun eine Steuerung der Vorrichtung 100 vorzunehmen, ist die Vorrichtung 100 über eine Datenleitung 310 mit einer Steuerungseinheit 320 verbunden. Diese Steuerungseinheit kann dabei Teil der Vorrichtung 100 ein. Die Steuerungseinheit 320 weist einen Prozessor 322 und einen Speicher 326 auf. Der Speicher 326 kann Instruktionen zur Steuerung der einzelnen Komponenten der Vorrichtung 100 enthalten. Die Anbindung der Steuerungseinheit 320 an die Datenleitung 310 erfolgt über eine Schnittstelle 324.

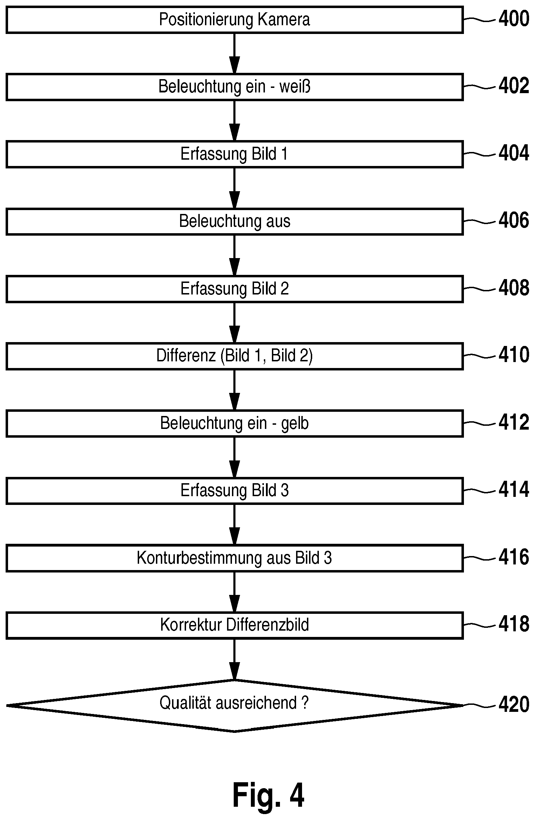

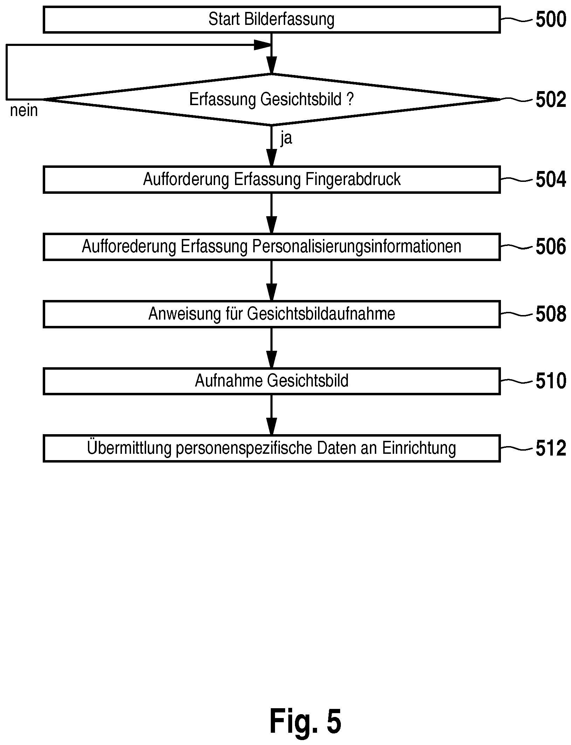

Im Folgenden sei exemplarisch anhand der Figur 3 und unter Zuhilfenahme der Flussdiagramme der Figuren 4 und 5 beschrieben, wie mittels der Vorrichtung 100 personenspezifische Daten der Person 316 erfasst werden können:

Das Verfahren beginnt mit Schritt 500 und einer Bilderfassung mittels der Kamera 302. Sobald die Kamera ein Bild des Gesichtes der Person 316 erfasst (Schritt 502) wird über ein entsprechendes Programm, welches im Speicher 326 der Steuereinheit 320 enthalten ist, eine Kommunikation der Vorrichtung 100 mit der Person 316 initiiert. Wenn die Kamera 302 ein Gesichtsbild der Person 316 erfasst, kann sich die Vorrichtung sicher sein, dass sich nun eine Person vor dem Kopfteil 116 der Vorrichtung 100 befindet. Über den Lautsprecher 122 (vergleiche Figur 1) kann nun eine Begrüßung der Person durch die Vorrichtung 100 stattfinden. Ferner kann über den Lautsprecher automatisiert erläutert werden, wie im Folgenden die Erfassung der personenspezifischen Daten der Person 316 ablaufen wird.

Alternativ oder zusätzlich zur Kommunikation der Vorrichtung 100 mit der Person 316 über den Lautsprecher kann auch eine Kommunikation über die berührungsempfindliche Anzeige 112 mit der Person 316 stattfinden. Beispielsweise könnten auf der berührungsempfindliche Anzeige 112 entsprechende Bedienhinweise eingeblendet werden.

Wenn im Schritt 502 kein Gesichtsbild erfasst wird, geht das System 100 in einen Schleifenmodus über, in welchem ständig überprüft wird, ob sich nun gerade eine Person 316 vor der Kamera 302 befindet.

Unter der Annahme, dass nun die Person 316 vor der Kamera 302 detektiert wurde und eine optionale entsprechende Begrüßung und Instruktion der Person 316 durch die Vorrichtung 100 automatisiert stattgefunden hat, kann in Schritt 504 eine Aufforderung durch die Vorrichtung ausgegeben werden, dass die Person einen Finger auf den Fingerabdrucksensor 114 legt. Daraufhin kann ebenfalls in Schritt 504 ein Fingerabdruck der Person 316 über den Sensor 114 automatisiert erfasst werden.

Währenddessen überprüft vorzugsweise die Kamera 302 permanent, ob sich der Benutzer noch vor der Kamera 302 befindet. Sollte sich nämlich in der Zwischenzeit der Benutzer von der Kamera wegbewegt haben, besteht die Möglichkeit, dass eine andere Person vor die Vorrichtung 100 getreten ist und stattdessen ihren Finger auf den Fingerabdrucksensor 114 gelegt hat. Aus diesem Grund ist die Steuerungseinheit 320 so konfiguriert, dass sobald sich die Person 316 in einer bestimmten Weise von der Kamera 302 wegbewegt, die Fingerabdruckerfassung abgebrochen wird. Damit wird einem entsprechenden Missbrauch vorgebeugt.

Nach Erfassen des Fingerabdrucks in Schritt 504 erfolgt in Schritt 506 eine Ausgabe, mittels welcher die Person 316 zur Bereitstellung von Personalisierungsinformationen aufgefordert wird. Hierfür bestehen mehrere Möglichkeiten. Zum einen kann der Benutzer über die berührungsempfindliche Anzeige 112 manuell seine Personalisierungsinformationen eingeben. Er kann beispielsweise seinen Namen, sein Geburtsdatum und seine Anschrift eingeben. Die Eingabe erfolgt dabei durch tippen auf der berührungsempfindliche Anzeige 112 oder unter Verwendung eines entsprechenden Stiftes, mittels welchem auf der Anzeige 112 geschrieben werden kann.

Alternativ oder zusätzlich ist es möglich, über das Lesegerät 108 aus einem vorhandenen Ausweisdokument der Person Teile der Personalisierungsinformation oder gar alle Personalisierungsinformationen auszulesen. Verfügt dieser Ausweis über eine sogenannte eID-Funktion, so wird der Benutzer aufgefordert werden, insbesondere in das Lesegerät eine entsprechende PIN zur Freigabe des Auslesens der Personalisierungsinformationen einzugeben. Nach erfolgreicher PIN-Überprüfung können die Personalisierungsinformationen direkt aus dem Ausweisdokument in den Speicher 326 eingelesen werden.

Es sei an dieser Stelle angemerkt, dass sich dieses Verfahren insbesondere dann anbietet, wenn ein Besitzer eines Personalausweises mit eID-Funktion diesen "alten" Personalausweis durch einen anderen neuen Personalausweis ersetzen lassen möchte. Beispielsweise könnte dies notwendig werden, weil sich aufgrund eines Umzugs der Person die Adresse der Person geändert hat. In diesem Fall genügt es, wenn über das Lesegerät 108 alle relevanten Personalisierungsinformationen aus dem alten Ausweis ausgelesen werden und zusätzlich zur Erstellung des neuen Ausweises über die Kamera 302 ein Gesichtsbild aufgenommen wird. Außerdem können optional oder zusätzlich die Fingerabdruckdaten wie obig beschrieben erfasst werden. Diese gesammelten Informationen ("personenspezifische Daten") werden dann an einen Computer eines Behördenmitarbeiters übertragen, welcher nochmal strichprobenartig überprüfen kann, ob die ihm durch die Vorrichtung 100 bereitgestellten personenspezifischen Daten auch tatsächlich zu der Person gehören, welche ihm gegenwärtig gegenüber sitzt und welche den neuen Personalausweis beantragt hat.

Möglich ist jedoch auch, dass das Lesegerät 108 zusätzlich über eine Kamera verfügt und das auf dem alten Ausweis aufgedruckte Gesichtsbild mit dem Gesichtsbild vergleichen kann, welches gegenwärtig die Kamera 302 liefert. Sind die beiden Gesichtsbilder identisch, kann sich die Vorrichtung 100 sicher sein, dass die Person 316 vor der Kamera 302 auch berechtigt ist, den neuen Ausweis zu beantragen.

Nachdem in Schritt 506 Personalisierungsinformationen eingegeben wurden, erfolgt in Schritt 508 die Ausgabe von Anweisungen für eine nun folgende Gesichtsaufnahme. Die Anweisungen könnten beispielsweise die Person 316 auffordern, sich über den Spiegel 120 selbst in die Augen zu sehen, dabei nicht zu lächeln, um so die Anforderungen an ein biometrisches Passbild zu erfüllen. In Schritt 510 erfolgt dann die Aufnahme des Gesichtsbildes über die Kamera 302. Nachdem alle Schritte abgeschlossen sind, kann in Schritt 512 eine Übermittlung der personenspezifischen Daten, welche in den Schritten 504 bis 510 erfasst wurden, an eine entsprechende Einrichtung 318 zur Verarbeitung der Daten über die Datenleitung 310 und die Schnittstelle 324 erfolgen.

Im Folgenden sei im Detail der Schritt 510 der Aufnahme des Gesichtsbildes, insbesondere im Zusammenhang mit dem Flussdiagram der Figur 4 näher erläutert. So erfolgt zur Aufnahme des Gesichtsbilds zunächst in Schritt 400 eine optimierte Positionierung der Kamera in vorzugsweise vertikaler Richtung 106 relativ zur Augenhöhe der Augen 314 der Person 316. Das Objektiv der Kamera 302 ist dabei so ausgewählt und eingestellt, dass das erfassbare Kamerabild wesentlich größer ist als das Kamerabild des zu erstellenden Gesichtsbildes der Person 316. In anderen Worten sieht also die Kamera 302 wesentlich mehr als nur das Gesicht der Person 316. Befindet sich also aufgrund einer sehr großen Person die Kamera 302 unterhalb der Höhe der Augen 314, wird die Steuerungseinheit 320 dieses nach einer Analyse des durch die Kamera 302 aufgenommenen aktuellen Bildes feststellen und über die Schnittstelle 324 und die Datenleitung 310 an den Antrieb 300 den Befehl ausgeben, das Kopfteil 116 weiter nach oben zu verfahren. Diese optimierte Positionierung der Kamera mit Schritt 400 erfolgt zumindest solange, bis sich die Kamera 302 in Richtung 312 auf Höhe der Augen 314 der Person 316 befindet.

Die Person 316 kann sich zur nachfolgenden Aufnahme des Gesichtsbildes vor einem beliebigen Hintergrund mit beliebigem Hintergrundelementen 330 befinden.

Insbesondere ist es hierzu nicht notwendig, einen neutralen Hintergrund zu verwenden, welcher beispielsweise in Form einer Wand hinter der Person 316 aufgestellt ist. Dies wird durch die folgenden Schritte der Aufnahme des Gesichtsbildes ermöglicht:

In Schritt 402 erfolgt zunächst das Einschalten einer Beleuchtung über die Beleuchtungseinrichtung 118 mit weißer Farbe. Diese Beleuchtung dient dazu, das Gesicht der Person 316 frontseitig, d.h. in Richtung 312 zu beleuchten. Hierzu weist die Beleuchtungseinrichtung 118 ein entsprechendes Leuchtmittel 306, z.B. LEDs auf.

In Schritt 404 wird das so beleuchtete Gesicht der Person aufgenommen und im Speicher 326 als erstes Bild 328 des Gesichts der Person 316 abgelegt. Das erste Bild 328 zeigt dabei zunächst sowohl das Gesicht 332 der Person 316, als auch den Hintergrund 330, vor welchem sich die Person 316 platziert hat.

In Schritt 406 wird die Beleuchtung ausgeschaltet und es erfolgt in Schritt 408 eine Erfassung eines zweiten Bildes durch die Kamera 302. Aufgrund der ausgeschalteten Beleuchtung wird im zweiten Bild das Gesicht 332 der Person 316 wesentlich dunkler erscheinen, wohingegen der Hintergrund 330 nahezu unverändert sein wird. Der Grund liegt darin, dass die zuvor durchgeführte Ausleuchtung des Gesichts 332 durch die Beleuchtungseinrichtung 306 lediglich so ausgelegt war, dass das Gesicht ausgeleuchtet wird, nicht hingegen zusätzlich der Hintergrund 330,

In Schritt 410 wird ein Differenzbild 334 des ersten Bildes 328, d.h. das mit weißem Licht belichteten Bildes und des zweiten Bildes, d.h. des unbeleuchteten Bildes, vorgenommen. Bei der Bildung des Differenzbildes 334 werden Helligkeitsunterschiede der Pixel der Bilder verwendet, wobei nun alle Pixel dem Hintergrund zugeordnet werden, deren Helligkeitsunterschied unter einem vorbestimmten Schwellwert liegt. Durch die Differenzbildung werden also Bildmerkmale, welche quasi keinen Helligkeitsunterschied aufweisen, herausgerechnet. Dies betrifft den Hintergrund 330, so dass im Schritt 410 erzeugten Differenzbild der Hintergrund 330 entfernt ist. Das Gesicht 332 der Person ist also im Differenzbild 334 vom Hintergrund freigestellt.

Um diesen Prozess der Hintergrundfreistellung weiter zu optimieren, kann in Schritt 412 erneut die Beleuchtung eingeschaltet werden, wobei hier eine farbige Beleuchtung gewählt wird. Beispielsweise kann nun das Gesicht 332 mit gelber Farbe beleuchtet werden. Die gelbe Farbe hebt sich dabei stark von einer natürlichen Farbgebung des Hintergrunds ab, so dass nach einer entsprechenden Bilderfassung in Schritt 414 aus dem so erfassten Bild in Schritt 416 die Konturen des Gesichts samt der Haare berechnet werden können. Mit der so berechneten äußeren Kontur des Gesichts kann anschließend das in Schritt 410 bestimmte Differenzbild optimiert und korrigiert werden.

Die Optimierung und Korrektur kann dabei auf vielfältige Weise geschehen. Beispielsweise könnte unter Verwendung des noch im Speicher 326 befindlichen ersten und zweiten Bildes eine erneute Differenzbildung stattfinden, wobei hier unter Verwendung der Konturen eine entsprechende Gewichtung der Helligkeitsunterschiede vorgenommen wird. Alternativ oder zusätzlich ist es möglich, dass nachträglich aus dem Differenzbild Teile entfernt werden, welche aufgrund der Konturen dem Hintergrund zugerechnet werden müssen oder indem nachträglich in das Differenzbild wieder Elemente des ersten Bildes eingefügt werden, welche dem eigentlichen Gesicht der Person zugerechnet werden müssen.

Nach der Korrektur des Differenzbildes in Schritt 418 erfolgt in Schritt 420 eine Überprüfung, ob die Qualität des so bestimmten Gesichtsbildes 330 vordefinierten Kriterien entspricht. Diese Kriterien können beispielsweise die Erfüllung vorgegebener biometrischer Vorgaben bei der Gesichtsbilderfassung umfassen.

Wenn die Qualität ausreichend ist, kann das so erstellte Gesichtsbild der Person 316 über die berührungsempfindliche Anzeige 112 dargestellt werden. Wenn der Benutzer mit der Bildqualität ebenfalls zufrieden ist, kann er durch eine entsprechende Eingabe die Übermittlung des Gesichtsbildes in Form der personenspezifischen Daten an die Einrichtung 318 zulassen.

Es sei an dieser Stelle angemerkt, dass beispielsweise nach jeder Erfassung eines Bildes ebenfalls eine Qualitätsüberprüfung dahingehend vorgenommen werden kann, ob dieses Bild verschiedenen Qualitätskriterien genügt. Beispielsweise kann jedes Mal überprüft werden, ob der Benutzer auf diesem Bild die Augen offen oder geschlossen hat, so dass von vorn herein unbrauchbare Gesichtsbilder verworfen werden und überhaupt nicht erst der weiteren Datenverarbeitung zugeordnet werden.

Um nun die Qualität der bereitgestellten Gesichtsbilder weiter zu erhöhen, weist das Kopfteil 116 sowohl vor dem Leuchtmittel 306, als auch vor der Kamera 302, Polarisationsfilter auf. Die Polarisationsfilter 308 vor dem Leuchtmittel 306 und der Polarisationsfilter 304 vor der Kamera 302 sind dabei um 90° zueinander verdreht. Durch die Verwendung der Polarisationsfilter werden Lichtreflexe von reflektierenden Oberflächen wie Brillengläsern oder Brillengestellen wirkungsvoll unterdrückt und der umpolarisierte Teil des Gesichts 332 wird besser sichtbar. Durch die Verwendung zweier Polarisationsfilter 308 und 304 wird dieser Effekt im Vergleich zur Verwendung eines einzelnen Polarisationsfilters 304 vor der Kamera 302 weiter verstärkt.

Außerdem ist die Kamera 302 in der Lage, Infrarotbilder der Person 316 aufzunehmen. Zum einen führt dies zu Bildern mit einer sehr hohen Schärfe, so dass eindeutig auf diesen Bildern die Person 316 vor dem Hintergrund 330 identifiziert werden kann. Zum anderen wird dadurch sichergestellt, dass nicht etwa statt der realen lebendigen Person 316 ein Fotoabzug einer Person vor die Kamera 302 gehalten wird. Ein Fotoabzug wird nämlich im Infrarotbereich keine für lebendige Personen charakteristische Infrarotabstrahlung liefern, so dass in diesem Fall die Kamera 302 keine brauchbaren Infrarotinformationen bereitstellen kann. Die Vorrichtung 100 weiß dann, dass ein Manipulationsversuch im Gange ist. Sie wird in diesem Fall die Erfassung der personenspezifischen Daten abrechen.

Das Leuchtmittel 306 kann mehrere LED-Leuchtstreifen umfassen, welche in unterschiedlichen Farben aufleuchten können. Die Beleuchtungseinrichtung selbst wird vorzugsweise entgegen der exemplarischen Darstellung der Figur 3 innerhalb des Kopfteils 116 angeordnet sein und aus einem transluzenten, also lichtdurchlässigen aber nicht transparenten Material gefertigt sein. Dadurch wird ein diffuses Licht erzeugt, das zum Ausleuchten der Person ohne ein Werfen von harten Schatten geeignet ist. Das tranzluzente Material, z.B. Kunststoff, wird innerhalb des Gehäuses ganzflächig mit dem Polarisationsfilter 308 versehen, mit dem, wie obig beschrieben, Reflektionen in zum Beispiel Brillen der Person 316 vermieden werden können. Die Beleuchtungseinrichtung 118 umgibt den Spiegel 120 vollständig, so dass eine gleichmäßige Ausleuchtung des Gesichts 332 der Person 316 gewährleistet werden kann. Die LED-Leuchtstreifen der Beleuchtungseinrichtung 118 bilden z.B. ein den halbdurchlässigen Spiegel 120 umgebendes geschlossenes Rechteck.

Die Beleuchtungseinrichtung 118 kann ferner dazu ausgebildet sein, auch vor Erfassung der Gesichtsbilder in Schritt 510 eine Beleuchtung der unmittelbaren Umgebung vor der Kamera 302 vorzunehmen. In dunkleren Räumen ist dies von Vorteil, da so einfacher das Herantreten einer Person vor die Kamera detektiert werden kann. Hierzu können auch zwei unterschiedliche Beleuchtungseinrichtungen verwendet werden, welche im oder am Kopfteil 116 angeordnet sein können, wobei die eine für das optimale Ausleuchten der Personen und das andere für das Erzeugen der Helligkeitsdifferenz vorgesehen ist.

Im Folgenden seien nochmals zusammenfassend und exemplarisch verschiedene Schritte erläutert, welche nach Inbetriebnahme der Vorrichtung 100 stattfinden. Nach Einschalten der Vorrichtung 100 und dem Starten der Steuerungseinheit wird das Programm, das die Ansteuerung aller Elemente, die Berechnungen und die Kommunikation mit dem Benutzer durchführt, automatisch gestartet.

Das verwendete Steuerprogramm fährt das Kopfteil zunächst in den Grundzustand. Dazu steuert es die Hubsäule 104 so an, dass sie die Kamera auf eine Höhe von z.B. 1700 mm fährt. Dies entspricht der Durchschnittsgröße einer Person. Danach startet das Programm der Steuerungseinheit den kontinuierlichen Bildeinzug von der Kamera 302.

Dann startet die Software der Steuereinheit 320 eine Bewegungserkennung, die permanent arbeitet. Dazu führt das Programm der Steuerungseinheit mit jedem von der Kamera eingezogenen Bilder Algorithmen einer Bildverarbeitung aus, mit denen Bewegungen der durch die Kamera abgebildeten Objekte aus der Folge von eingezogenen Bildern detektiert werden. In diesem Zustand verbleibt die Vorrichtung, bis eine Person an sie herantritt.

Wenn eine Person an die Vorrichtung 100 herantritt, wird die Person durch das Kamerabild erfasst und die innerhalb des Programms arbeitende Bewegungserkennung liefert ein Signal. Daraufhin gibt die Vorrichtung die Grußformel "Herzlich Willkommen" mittels Sprachausgabe durch die Lautsprecher 122 aus.

Auf dem berührungsempfindlichen Bildschirm wird nun ein Bedienelement "Knopf" mit der Bezeichnung "Start" angezeigt. Wenn die Person mit dem Finger auf diesen Knopf drückt, verzweigt das Programm in einen Ablauf, der die Aufnahme aller personenspezifischen Daten steuert. Das Programm führt ab jetzt mit jedem von der Kamera eingezogenen Bild einen Algorithmus der Bildverarbeitung aus, mit dem die Pixelkoordinaten von Augenpaaren bestimmt werden.

Wenn erfolgreich Pixelkoordinaten von Augenpaaren bestimmt wurden, wird im nächsten Schritt die Höhe der Kamera in Bezug zur Körpergröße der Person geprüft und gegebenenfalls korrigiert. Dazu wird der Differenzwert dieser Pixelkoordinaten zu einem Vorgabewert in vertikaler Richtung bestimmt. Wenn dieser Differenzwert einen Schwellwert übersteigt, wird von dem Programm ein Steuersignal für die Hubsäule erzeugt und an die Steuerelektronik gesendet. Dieses Steuersignal bewirkt, dass die Hubsäule die gesamten Aufbauten, aufweisend Bedienpult 110 und Kopfteil 116 mit der darin befindlichen Kamera 302 um einen Höhebetrag absenkt oder abhebt, der die Augenposition der im Kamerabild abgebildeten Person um die genannte Pixeldifferenz in vertikaler Richtung korrigiert. Dieser Vorgang kann permanent wiederholt werden, solange die Erfassung der personenspezifischen Daten stattfindet.

In einer weiterführenden technischen Ausgestaltung kann auch eine Prüfung und Korrektur der Augenposition in horizontaler Richtung erfolgen. Dazu wird aus den Pixelkoordinaten der Augenpositionen deren Position in horizontaler Richtung ermittelt. Wenn der Benutzer im aufzunehmenden Bild in horizontaler Richtung mittig gestellt werden soll, dann wird als Vorgabewert für die Pixelkoordinaten der Augenposition die halbe Bildbreite festgelegt. Es können auch andere Vorgabewerte festgelegt werden. Es wird dann aus dem festgelegten Vorgabewert und den Pixelkoordinaten der Augenposition in horizontaler Richtung die Differenz ermittelt. Wenn diese Differenz einen vorgegebenen Schwellwert übersteigt, wird von dem Programm mittels Sprachausgabe die Bitte an die Person gerichtet, die eigene Position entsprechend zu ändern. Beispielsweise könnte der Satz "Bitte bewegen Sie sich 5 cm nach rechts" per Sprachausgabe an den Benutzer gerichtet werden. Dieser Vorgang wird solange wiederholt, bis der Differenzwert der Pixelkoordinaten in horizontaler Richtung den genannten Schwellwert unterschreitet.

Das Abbild des Benutzers befindet sich jetzt in einer optimalen Position innerhalb des Kamerabildes. Es beginnt nun die Aufnahme von mehreren freigestellten Bildern. Dazu werden in einem geeigneten zeitlichen Abstand, beispielsweise von einer Sekunde, Bilder von der Kamera eingezogen die im Wechsel jeweils beleuchtet und unbeleuchtet sind. Vom Programm wird das Einziehen der Bilder beispielsweise wie folgt organisiert:

| | |
|---|---|
| 1. Sekunde | 1. unbeleuchtetes Bild einziehen und Beleuchtungseinrichtung einschalten |
| 2. Sekunde | 1. beleuchtetes Bild einziehen |
| 3. Sekunde | 2. beleuchtetes Bild einziehen und Beleuchtungseinrichtung ausschalten |
| 4. Sekunde | 2. unbeleuchtetes Bild einziehen |
| 5. Sekunde | 3. unbeleuchtetes Bild einziehen und Beleuchtungseinrichtung einschalten |
| 6. Sekunde | 3. beleuchtetes Bild einziehen und Beleuchtungseinrichtung ausschalten |

Es sind jetzt drei Bildpaare vorhanden, die jeweils aus einem Bild der Person mit eingeschalteter Beleuchtung und einem Bild der Person mit ausgeschalteter Beleuchtung bestehen. Das Programm erzeugt jetzt für jedes der drei Bildpaare das zugehörige Differenzbild. Aus dem jeweiligen Differenzbild und einem festgelegten Schwellwert wird das zugehörige freigestellte Personenportrait erstellt.

Bei der Erzeugung des Differenzbildes wird jedem Pixel dieses Differenzbildes der Wert 0 zugeordnet, wenn der Wert des Pixels mit denselben Koordinaten im Differenzbild einen vorgegebenen Schwellwert unterschreitet. Ansonsten wird dem Pixel der Wert des Pixels mit denselben Koordinaten aus dem beleuchteten Bild mit der für die Portraitaufnahme beleuchteten Person zugeordnet.

Vorzugsweise ist die Kamera mit einem Objektiv ausgerüstet, mit dem eine geringe Schärfentiefe in den digitalen Bildern der Kamera realisierbar ist. Bilder, die mit einem Objektiv mit geringer Schärfentiefe erstellt werden haben die Eigenschaft, dass deren Hintergrund wenig Kanten aufweist, wohingegen im Vordergrund viele Kanten sichtbar sind. Dies ist, wie obig beschrieben, durch die Anzahl auflösbarer Linienpaare/mm mathematisch beschreibbar. Insbesondere sind durch ein solches Objektiv im Vordergrund befindliche Objekte vom Hintergrund durch eine deutliche Kante getrennt. Die Erkennung dieser Kante kann für eine Optimierung des beschriebenen Freistellungsverfahrens benutzt werden.

Im Folgenden wir dieser Ablauf der optimierten Freistellung erläutert: Zunächst wird eine Kantenerkennung mit einem der beleuchteten Bilder der Person durchgeführt und daraufhin wird das Ergebnis in einem z.B. binären Bild gespeichert.

Danach wird eine äußere Kontur aus dem binären Bild mit den Kanten unter Anwendung von bekannten Algorithmen der Bildverarbeitung ermittelt. Das hieraus resultierende Ergebnis wird in einem weiteren z.B. Binärbild gespeichert, wobei alle Pixel, die auf den Strecken der Kontur liegen den Wert 1 zugewiesen bekommen und alle anderen Pixel den Wert 0 zugewiesen bekommen.

Die Kontur ist jetzt als geschlossenes Polygon, beispielsweise als Datenarray, vorhanden. Danach wird für jeden Bildpunkt bestimmt, ob er innerhalb oder außerhalb des Polygons liegt. Dazu wird z.B. ein geeigneter Punkt-in-Polygon-Test durchgeführt. Punkt-in-Polygon-Tests sind bekannte Algorithmen.

Nun wird das zuvor erzeugte Differenzbild korrigiert oder optimiert. Hierfür bestehen mehrere Möglichkeiten. Zum einen kann wieder jedem Pixel dieses Differenzbildes entweder der Wert 0 zugeordnet, wenn der Pixels außerhalb des Polygons liegt oder es wird der Wert des Pixel beibehalten, wenn der Pixel innerhalb des Polygons liegt.

Möglich ist zum zweiten, das Differenzbild zu optimieren, indem bei der Bildung des Differenzbildes eine Gewichtung vorgenommen wird: Bildpunkte innerhalb des Polygons erhalten einen geringeren Schwellwert für die Differenzbildung, wohingegen Bildpunkte außerhalb des Polygons einen höheren Schwellwert erhalten.

In weiterer technischer Ausführung können auch andere Verfahren für die Optimierung der Freistellung von Personenportraits eingesetzt werden. Denkbar sind beispielsweise Verfahren der Bewegungserkennung um den Vordergrund und den Hintergrund in einem Kamerabild voneinander zu trennen.

Die drei freigestellten Bilder werden auf dem Berührungsbildschirm angezeigt. Zusätzlich wird die Aufforderung an den Benutzer ausgegeben, eines der freigestellten Bilder auszuwählen. Das ausgewählte Bild wird abgespeichert. Falls der Benutzer mit keinem der freigestellten Bilder zufrieden ist, kann der gesamte Vorgang von vorne begonnen werden.

Danach ermöglicht das Programm dem Benutzer die Eingabe aller weiteren personenspezifischen Daten. Dazu werden auf dem Berührungsbildschirm eine Folge von Eingabemasken dargestellt. Die vom Benutzer eingegebenen Daten werden zusammen mit den freigestellten Bildern gespeichert.

Die Daten können auch von einem bereits vorhandenen Ausweis durch einen Ausweisleser (Lesegerät) eingelesen werden. Die Entscheidung, welche Eingabeform gewählt wird, obliegt z.B. dem Benutzer.

Zu den aufzunehmenden Daten kann auch die Aufnahme eines Fingerabdrucks gehören. Dazu ist ein Fingerprintleser in den Automaten zu integrieren.

Als letzte Eingabe wird die Unterschrift des Benutzers vom Programm eingefordert. Das Unterschreiben erfolgt mit einem Eingabestift oder Finger, der für die Bedienung des eingebauten Berührungsbildschirms geeignet ist.

Danach werden alle erfassten Daten automatisch an die zentrale Datenerfassungsstelle übermittelt. Dort wird dann, gegebenenfalls nach einer weiteren Überprüfung, der Druck eines entsprechenden Ausweises eingeleitet.

Alle Eingaben sind damit abgeschlossen und der Automat verabschiedet sich vom Benutzer. Dazu erzeugt das Programm eine entsprechende Sprachausgabe. Beispielsweise könnten die folgenden Sätze per Sprachausgabe ausgegeben werden: "Vielen Dank für die Eingabe Ihrer Daten. Bitte begeben Sie sich zur Ausweisausgabestelle. Ihr Ausweis liegt dort für Sie bereit."

In einer weiterführenden technischen Ausgestaltung startet das Programm eine biometrische Gesichtserkennung, sowie der Benutzer den Startbutton betätigt. Als erstes wird eine Vergleichsvorlage vom Benutzer angelegt. Während der Benutzer des gesamten oben beschriebenen Eingabevorganges wird in regelmäßigen Abständen, beispielsweise alle 5 Sekunden oder nach bestimmten auslösenden Eingaben, eine biometrische Gesichtserkennung durchgeführt. Dadurch kann sichergestellt werden, dass alle Eingaben von ein und derselben Person durchgeführt werden. Missbräuchliche Anwendungen der Vorrichtung werden dadurch erschwert.

### Bezugszeichenliste

- 100: Vorrichtung
- 102: Fuß
- 104: Hubsäule
- 106: Richtung
- 108: Lesegerät
- 110: Bedienpult
- 112: berührungsempfindliche Bildschirm
- 114: Fingerabdrucksensor
- 116: Kopfteil
- 118: Beleuchtungseinrichtung
- 120: Spiegel
- 122: Lautsprecher
- 300: Antrieb
- 302: Kamera
- 304: Polarisationsfilter
- 306: Leuchtmittel
- 308: Polarisationsfilter
- 310: Datenleitung
- 312: Richtung
- 314: Augen
- 316: Person
- 318: Einrichtung
- 320: Steuerungseinrichtung
- 322: Prozessor
- 324: Schnittstelle
- 326: Speicher
- 328: Gesichtsbild
- 330: Hintergrund
- 332: Gesicht
- 334: Gesichtsbild

## Patentansprüche

1. Vorrichtung (100) zur Erfassung personenspezifischer Daten einer Person (316), wobei die personenspezifischen Daten ein Gesichtsbild der Person (316) umfassen, wobei die Vorrichtung (100) eine Kamera (302) zur Aufnahme des Gesichtsbildes der Person (316), eine Beleuchtungseinrichtung (306) und einen semi-transparenten Spiegel (120) aufweist, wobei der semi-transparente Spiegel (120) zwischen der Person (316) und der Kamera (302) angeordnet ist, wobei der semi-transparente Spiegel (120) so ausgerichtet ist, dass auf der der Person (316) zugewandten Seite des semi-transparenten Spiegels (120) der Strahlengang von auf den semi-transparenten Spiegel (120) einfallenden Lichts parallel ist zum Strahlengang des vom semi-transparenten Spiegel (120) zurück reflektierten Teil dieses Lichts, wobei die Beleuchtungseinrichtung (306) für eine frontseitige Beleuchtung der Person (316) ausgebildet ist, wobei die Vorrichtung (100) ferner eine Steuerungseinheit (320) aufweist zur Durchführung einer Bilderfassung durch:
- Erzeugung von weißem Licht durch die Beleuchtungseinrichtung (306) zur Beleuchtung des Gesichts der Person (316) und während der Beleuchtung Erfassen eines ersten Bildes (328) des Gesichts der Person (316) durch die Kamera (302), **gekennzeichnet durch**:
- Erfassen eines zweiten Bildes des Gesichts der Person (316) durch die Kamera (302) ohne die Erzeugung des weißen Lichts,
- Bildung eines ersten Differenzbildes (334) des ersten Bildes (328) und des zweiten Bildes, wobei im ersten Differenzbild das Gesicht (332) der Person (316) vom Hintergrund (330) freigestellt ist, wobei die personenspezifischen Daten das erste Differenzbild (334) als das Gesichtsbild umfassen,
wobei die Steuerungseinheit (320) ferner ausgebildet ist zum:
- Steuern der Beleuchtungseinrichtung (306) zur Erzeugung von farbigem oder infrarotem Licht durch die Beleuchtungseinrichtung (306) zur Beleuchtung des Gesichts der Person (316), und Steuern der Kamera (302), um während der Beleuchtung ein drittes Bild des Gesichts der Person (316) durch die Kamera (302) zu erfassen,
- Erfassen eines vierten Bildes des Gesichts der Person (316) durch die Kamera (302) ohne die Erzeugung des farbigen oder infraroten Lichts,
- Bildung eines zweiten Differenzbildes des dritten Bildes und des vierten Bildes, wobei im zweiten Differenzbild das Gesicht (332) der Person (316) vom Hintergrund (330) freigestellt ist, und Berechnung der äußeren Konturen des Gesichts aus dem zweiten Differenzbild,
- Korrektur des ersten Differenzbildes (334) mit den aus dem zweiten Differenzbild berechneten äußeren Konturen.

2. Vorrichtung (100) nach Anspruch 1, wobei die Erfassung des dritten Bildes des Gesichts der Person (316) gefiltert entsprechend der Verwendung des farbigen oder infraroten Lichts erfolgt.

3. Vorrichtung (100) nach einem der vorigen Ansprüche, wobei die Kamera (302) ein Objektiv aufweist, wobei das Objektiv dazu ausgebildet ist, ausschließlich das Gesicht (332) der Person (316) scharf zu erfassen und den Hintergrund (330) unscharf zu erfassen, wobei die Steuerungseinheit (320) ferner ausgebildet ist zum
- Berechnen der äußeren Konturen des Gesichts aus der Schärfendifferenz des Gesichts der Person (316) und des Hintergrund (330)s,
- Korrektur des ersten Differenzbildes (334) mit den berechneten äußeren Konturen.

4. Vorrichtung (100) nach einem der vorigen Ansprüche, wobei die Beleuchtungseinrichtung (306) für eine Beleuchtung der Person (316) mit polarisiertem Licht ausgebildet ist, wobei die Kamera (302) einen Polarisationsfilter (304) aufweist, wobei die Polarisationsrichtung des polarisierten Lichts und die Polarisationsrichtung des durch den Polarisationsfilter (304) in die Kamera (302) transmittierten Lichts um 90 Grad zueinander verdreht sind.

5. Vorrichtung (100) nach einem der vorigen Ansprüche, wobei die Steuerungseinheit (320) ferner ausgebildet ist zur Analyse des Gesichtsbildes der Person (316), wobei die Analyse eine Bestimmung der Kopfhaltung und/oder der Augenhaltung umfasst, wobei die Steuerungseinheit (320) ferner ausgebildet ist, im Falle dessen die Kopfhaltung und/oder die Augenhaltung vordefinierten Kriterien nicht entspricht das Gesichtsbild der Person (316) automatisch zu verwerfen.

6. Vorrichtung (100) nach einem der vorigen Ansprüche, wobei die Kamera (302) dazu ausgebildet ist, eine Vielzahl von Bildern hintereinander in einem Videostrom zu erfassen, wobei die Steuerungseinheit (320) ferner ausgebildet ist, bei der Bildung des ersten Differenzbildes (334) und/oder des zweiten Differenzbildes nur die Bilder des Videostroms zu verwenden, welche vordefinierten Qualitätskriterien entsprechen.

7. Vorrichtung (100) nach einem der vorigen Ansprüche, wobei die Kamera (302) durch eine Antriebseinheit höhenverstellbar ist, wobei die Steuerungseinheit (320) ferner ausgebildet ist,
- die räumliche Position der Augenpartie (314) der Person (316) relativ zur Position der Kamera (302) zu detektieren und
- im Falle dessen sich die räumliche Position der Augenpartie (314) nicht in einem vordefinierten Bereich relativ zur Position der Kamera (302) befindet, die Antriebseinheit anzusteuern, um automatisch die Höhe der Kamera (302) über die Antriebseinheit zu verfahren, so dass sich die räumliche Position der Augenpartie in dem vordefinierten Bereich relativ zur Position der Kamera (302) befindet.

8. Vorrichtung (100) nach einem der vorigen Ansprüche, wobei die Kamera (302) zur Erfassung von infrarotem Licht ausgebildet ist, wobei die Steuerungseinheit (320) ferner ausgebildet ist zur
- Erfassung eines fünften Bildes des Gesichts der Person (316) durch die Kamera (302) ohne die Beleuchtung des Gesichts der Person (316) durch die Beleuchtungseinrichtung (306), wobei die Erfassung des fünften Bildes im infraroten Wellenlängenbereich erfolgt,
- Berechnung der äußeren Konturen des Gesichts aus dem fünften Bild,
- Korrektur des ersten Differenzbildes (334) mit den aus dem fünften Bild berechneten äußeren Konturen.

9. Vorrichtung (100) nach einem der vorigen Ansprüche, wobei die Vorrichtung (100) ein Lesegerät (108) für ein Ausweisdokument der Person (316) aufweist, wobei das Lesegerät (108) dazu ausgebildet ist, im aktivierten Zustand Personalisierungsinformationen der Person (316) aus dem Ausweisdokument auszulesen, wobei die personenspezifischen Daten die Personalisierungsinformationen umfassen.

10. Vorrichtung (100) nach einem der vorigen Ansprüche, ferner mit einem Fingerabdrucksensor (114), wobei der Fingerabdrucksensor (114) dazu ausgebildet ist, im aktivierten Zustand einen Fingerabdruck der Person (316) zu erfassen, wobei die personenspezifischer Daten den erfassten Fingerabdruck umfassen.

11. Vorrichtung (100) nach Anspruch , 8 oder 9, wobei die Steuerungseinheit (320) ferner ausgebildet ist, das Lesegerät (108) und/oder der Fingerabdrucksensor (114) und/oder das Bedienpult (110) ausschließlich und höchstens so lange in den aktivierten Zustand zu versetzen, solange ein Gesichtsbild der Person (316) durch die Kamera (302) erfasst wird.

12. Vorrichtung (100) nach einem der vorigen Ansprüche, ferner mit einer Netzwerkschnittstelle, wobei die Vorrichtung (100) dazu ausgebildet ist, die personenspezifischen Daten an eine Einrichtung zum automatisierten Erzeugen eines Ausweisdokuments aus den personenspezifischen Daten oder an eine Einrichtung zum Verifizieren der personenspezifischen Daten zu übertragen.

13. Computerimplementiertes Verfahren zur Erfassung personenspezifischer Daten einer Person (316) durch eine Vorrichtung (100), wobei die personenspezifischen Daten ein Gesichtsbild der Person (316) umfassen, wobei die Vorrichtung (100) eine Kamera (302) zur Aufnahme des Gesichtsbildes der Person (316), eine Beleuchtungseinrichtung (306) und einen semi-transparenten Spiegel (120) aufweist, wobei der semi-transparente Spiegel (120) zwischen der Person (316) und der Kamera (302) angeordnet ist, wobei der semi-transparente Spiegel (120) so ausgerichtet ist, dass auf der der Person (316) zugewandten Seite des semi-transparenten Spiegels (120) der Strahlengang von auf den semi-transparenten Spiegel (120) einfallenden Lichts parallel ist zum Strahlengang des vom semi-transparenten Spiegel (120) zurück reflektierten Teil dieses Lichts, wobei die Beleuchtungseinrichtung (306) für eine frontseitige Beleuchtung der Person (316) ausgebildet ist, wobei das Verfahren umfasst:
- Erzeugung von weißem Licht durch die Beleuchtungseinrichtung (306) zur Beleuchtung des Gesichts der Person (316) und während der Beleuchtung Erfassen eines ersten Bildes (328) des Gesichts der Person (316) durch die Kamera (302), **gekennzeichnet durch**:
- Erfassen eines zweiten Bildes des Gesichts der Person (316) durch die Kamera (302) ohne die Erzeugung des weißen Lichts,
- Bildung eines ersten Differenzbildes (334) des ersten Bildes (328) und des zweiten Bildes, wobei im ersten Differenzbild das Gesicht (332) der Person (316) vom Hintergrund (330) freigestellt ist, wobei die personenspezifischen Daten das erste Differenzbild (334) als das Gesichtsbild umfassen,
- Steuern der Beleuchtungseinrichtung (306) zur Erzeugung von farbigem oder infrarotem Licht durch die Beleuchtungseinrichtung (306) zur Beleuchtung des Gesichts der Person (316), sowie Steuern der Kamera (302), um während der Beleuchtung ein drittes Bild des Gesichts der Person (316) durch die Kamera (302) zu erfassen,
- Erfassen eines vierten Bildes des Gesichts der Person (316) durch die Kamera (302) ohne die Erzeugung des farbigen oder infraroten Lichts,
- Bildung eines zweiten Differenzbildes des dritten Bildes und des vierten Bildes, wobei im zweiten Differenzbild das Gesicht (332) der Person (316) vom Hintergrund (330) freigestellt ist, und Berechnung der äußeren Konturen des Gesichts aus dem zweiten Differenzbild,
- Korrektur des ersten Differenzbildes (334) mit den aus dem zweiten Differenzbild berechneten äußeren Konturen.

14. Computerprogrammprodukt mit von einem Prozessor ausführbaren Instruktionen, die bei der Ausführung des Programms durch einen Computer diesen veranlassen, die Verfahrensschritte nach Anspruch 13 durchzuführen.

15. Signalfolge, die, wenn in einem Computer abgespeichert, eine Abfolge von Instruktionen darstellt, die, wenn auf diesem Computer ausgeführt, das Verfahren nach Anspruch 13 ausführt.

## Claims

1. A device (100) for capturing person-specific data of a person (316), wherein the person-specific data comprises a facial image of the person (316), wherein the device (100) has a camera (302) for recording the facial image of the person (316), a lighting apparatus (306), and a semi-transparent mirror (120), wherein the semi-transparent mirror (120) is arranged between the person (316) and the camera (302), wherein the semi-transparent mirror (120) is oriented such that, on the side of the semi-transparent mirror (120) facing towards the person (316), the optical path of light incident on the semi-transparent mirror (120) is parallel to the optical path of the portion of this light reflected back by the semi-transparent mirror (120), wherein the lighting apparatus (306) is configured to illuminate the person (316) from the front, wherein the device (100) also has a control unit (320) for capturing an image, by:
- generating white light by means of the lighting apparatus (306) in order to illuminate the face of the person (316) and, during the illumination, capturing a first image (328) of the face of the person (316) by means of the camera (302), **characterised by**
- capturing a second image of the face of the person (316) by means of the camera (302) without generation of the white light,
- forming a first differential image (334) of the first image (328) and the second image, wherein in the first differential image the face (332) of the person (316) is freed from the background (330), wherein the person-specific data comprises the first differential image (334) as the facial image,
wherein the control unit (320) is also configured to:
- control the lighting apparatus (306) for generation of coloured or infrared light by the lighting apparatus (306) for illuminating the face of the person (316) and to control the camera (302) in order to capture a third image of the face of the person (316) by the camera (302) during the illumination,
- capture a fourth image of the face of the person (316) by means of the camera (302) without the generation of the coloured or infrared light,
- form a second differential image of the third image and the fourth image, wherein in the second differential image the face (332) of the person (316) is freed from the background (330), and to calculate the outer contours of the face from the second differential image,
- correct the first differential image (334) with the outer contours calculated from the second differential image.

2. The device (100) according to claim 1, wherein the third image of the face of the person (316) is captured in a manner filtered in accordance with the use of the coloured or infrared light.

3. The device (100) according to either any one of the preceding claims, wherein the camera (302) has a lens, wherein the lens is configured to capture exclusively the face (332) of the person (316) in focus and to capture the background (330) out of focus, wherein the control unit (320) is also configured to
- calculate the outer contours of the face from the sharpness differences of the face of the person (316) and of the background (330),
- correct the first differential image (334) with the calculated outer contours.

4. The device (100) according to any one of the preceding claims, wherein the lighting apparatus (306) is configured to illuminate the person (316) with polarised light, wherein the camera (302) has a polarisation filter (304), wherein the polarisation direction of the polarised light and the polarisation direction of the light transmitted through the polarisation filter (304) into the camera (302) are rotated by 90 degrees relative to one another.

5. The device (100) according to any one of the preceding claims, wherein the control unit (320) is also configured for the analysis of the facial image of the person (316), wherein the analysis comprises a determination of the head posture and/or the eye posture, wherein the control unit (320) is also configured, in the event that the head posture and/or the eye posture do/does not meet predefined criteria, to automatically reject the facial image of the person (316).

6. The device (100) according to any one of the preceding claims, wherein the camera (302) is configured to capture a plurality of images successively in a video stream, wherein the control unit (320) is also configured, when forming the first differential image (334) and/or the second differential image, to use only the images of the video stream that meet predefined quality criteria.

7. The device (100) according to any one of the preceding claims, wherein the camera (302) is height-adjustable by a drive unit, wherein the control unit (320) is also configured,
- to capture the spatial position of the eye area (314) of the person (316) relative to the position of the camera (302), and,
- in the event that the spatial position of the eye area (314) is not located in a predefined region relative to the position of the camera (302), to actuate the drive unit in order to automatically move the height of the camera (302) via the drive unit, such that the spatial position of the eye area is located in the predefined region relative to the position of the camera (302).

8. The device (100) according to any one of the preceding claims, wherein the camera (302) is configured to capture infrared light, wherein the control unit (320) is also configured to
- capture a fifth image of the face of the person (316) by the camera (302) without illumination of the face of the person (316) by means of the lighting apparatus (306), wherein the fifth image is captured in the infrared wavelength range,
- calculate the outer contours of the face from the fifth image,
- correct the first differential image (334) with the outer contours calculated from the fifth image.

9. The device (100) according to any one of the preceding claims, wherein the device (100) has a reader (108) for an identification document of the person (316), wherein the reader (108) is configured, in the activated state, to read out personalisation information of the person (316) from the identification document, wherein the person-specific data comprises the personalisation information.

10. The device (100) according to any one of the preceding claims, further comprising a fingerprint sensor (114), wherein the fingerprint sensor (114) is configured, in the activated state, to capture a fingerprint of the person (316), wherein the person-specific data comprises the captured fingerprint.

11. The device (100) according to claim 8 or 9, wherein the control unit (320) is also configured to set the reader (108) and/or the fingerprint sensor (114) and/or the control panel (110) exclusively into the activated state, at most until a facial image of the person (316) is captured by the camera (302).

12. The device (100) according to any one of the preceding claims, further comprising a network interface, wherein the device (100) is configured to transfer the person-specific data to an apparatus for the automated generation of an identification document from the person-specific data or to an apparatus for verifying the person-specific data.

13. A computer-implemented method for capturing person-specific data of a person (316) by means of a device (100), wherein the person-specific data comprises a facial image of the person (316), wherein the device (100) has a camera (302) for recording the facial image of the person (316), a lighting apparatus (306), and a semi-transparent mirror (120), wherein the semi-transparent mirror (120) is arranged between the person (316) and the camera (302), wherein the semi-transparent mirror (120) is oriented such that, on the side of the semi-transparent mirror (120) facing towards the person (316), the optical path of light incident on the semi-transparent mirror (120) is parallel to the optical path of the portion of this light reflected back by the semi-transparent mirror (120), wherein the lighting apparatus (306) is configured to illuminate the person (316) from the front, wherein the method comprises the steps of:
- generating white light by means of the lighting apparatus (306) in order to illuminate the face of the person (316) and, during the illumination, capturing a first image (328) of the face of the person (316) by means of the camera (302), **characterised by**
- capturing a second image of the face of the person (316) by means of the camera (302) without generation of the white light,
- forming a first differential image (334) of the first image (328) and the second image, wherein in the first differential image the face (332) of the person (316) is freed from the background (330), wherein the person-specific data comprises the first differential image (334) as the facial image,
- controlling the lighting apparatus (306) for generation of coloured or infrared light by the lighting apparatus (306) for illuminating the face of the person (316) and controlling the camera (302) in order to capture a third image of the face of the person (316) by the camera (302) during the illumination,
- capturing a fourth image of the face of the person (316) by means of the camera (302) without the generation of the coloured or infrared light,
- forming a second differential image of the third image and the fourth image, wherein in the second differential image the face (332) of the person (316) is freed from the background (330), and calculating the outer contours of the face from the second differential image,
- correcting the first differential image (334) with the outer contours calculated from the second differential image.

14. A computer program product with instructions that can be executed by a processor and that, when the program is run by a computer, prompt said computer to carry out the method steps according to claim 13.

15. A signal sequence which, when stored in a computer, constitutes a sequence of instructions, which, when run on this computer, executes the method according to claim 13.

## Revendications

1. Dispositif (100) pour l'acquisition de données spécifiques à une personne d'une personne (316), où les données spécifiques à une personne comprennent une image faciale de la personne (316), où le dispositif (100) présente une caméra (302) pour la prise de l'image faciale de la personne (316), un dispositif d'éclairage (306) et un miroir (120) semi transparent, où le miroir (120) semi transparent est disposé entre la personne (316) et la caméra (302), où le miroir (120) semi transparent est orienté de telle manière que, sur le côté orienté vers la personne (316) du miroir (120) semi transparent, la trajectoire du rayonnement de la lumière tombant sur le miroir (120) semi transparent est parallèle à la trajectoire du rayonnement de la partie réfléchie en retour de cette lumière par le miroir (120) semi transparent, où le dispositif d'éclairage (306) est conçu pour un éclairage frontal de la personne (316), où le dispositif (100) présente en outre une unité de commande (320) pour l'exécution d'une prise d'image par :
- la génération de lumière blanche par le dispositif d'éclairage (306) pour l'éclairage du visage de la personne (316) et pendant l'éclairage, la prise d'une première image (328) du visage de la personne (316) par la caméra (302),
**caractérisé par** :
- la prise d'une deuxième image du visage de la personne (316) par la caméra (302) sans génération de la lumière blanche,
- la formation d'une première image différentielle (334) de la première image (328) et de la deuxième image, où, dans la première image différentielle, le visage (332) de la personne (316) est disposé de manière libre dans l'arrière plan (330), où les données spécifiques à une personne comprennent la première image différentielle (334) en tant qu'image faciale,
où l'unité de commande (320) est en outre conçue pour :
- la commande du dispositif d'éclairage (306) pour la génération d'une lumière colorée ou infrarouge par le dispositif d'éclairage (306) pour l'éclairage du visage de la personne (316), et pour la commande de la caméra (302) afin de prendre une troisième image du visage de la personne (316) par la caméra (302) pendant l'éclairage,
- la prise d'une quatrième image du visage de la personne (316) par la caméra (302) sans la génération de la lumière colorée ou infrarouge,
- la formation d'une deuxième image différentielle de la troisième image et de la quatrième image, où, dans la deuxième image différentielle, le visage (332) de la personne (316) est disposé de manière libre par rapport à l'arrière plan (330), et le calcul des contours extérieurs du visage à partir de la deuxième image différentielle,
- la correction de la première image différentielle (334) avec les contours extérieurs calculés à partir de la deuxième image différentielle.

2. Dispositif (100) selon la revendication 1, dans lequel la prise de la troisième image du visage de la personne (316) a lieu filtrée conformément à l'utilisation de la lumière colorée ou infrarouge.

3. Dispositif (100) selon l'une des revendications précédentes, dans lequel la caméra (302) présente un objectif, où l'objectif est conçu pour prendre de manière nette exclusivement le visage (332) de la personne (316) et prendre l'arrière plan (330) de manière non nette, où l'unité de commande (320) est en outre conçue pour
- le calcul des contours extérieurs du visage à partir de la différence de netteté du visage de la personne (316) et de l'arrière plan (330),
- la correction de la première image différentielle (334) avec les contours externes calculés.

4. Dispositif (100) selon l'une des revendications précédentes, dans lequel le dispositif d'éclairage (306) est conçu pour l'éclairage de la personne (316) avec de la lumière polarisée, où la caméra (302) présente un filtre de polarisation (304), où l'orientation de la polarisation de la lumière polarisée et l'orientation de la polarisation de la lumière transmise par le filtre de polarisation (304) dans la caméra (302) sont déformées l'une par rapport à l'autre de 90 degrés.

5. Dispositif (100) selon l'une des revendications précédentes, dans lequel l'unité de commande (320) est en outre conçue pour l'analyse de l'image faciale de la personne (316), où l'analyse comprend une détermination du port de tête et/ou de la position des yeux, où l'unité de commande (320) est en outre conçue, dans le cas où le port de tête et/ou la position des yeux ne correspondent pas à des critères prédéfinis, rejeter automatiquement l'image faciale de la personne (316).

6. Dispositif (100) selon l'une des revendications précédentes, dans lequel la caméra (302) est conçue pour la prise d'une multitude d'images les unes à la suite des autres dans un flux vidéo, où l'unité de commande (320) est en outre conçue pour, lors de la formation de la première image différentielle (334) et/ou de la deuxième image différentielle, utiliser uniquement les images du flux vidéo lesquelles correspondent à des critères de qualité prédéfinis.

7. Dispositif (100) selon l'une des revendications précédentes, dans lequel la caméra (302) peut être réglée en hauteur par une unité d'entraînement, où l'unité de commande (320) est en outre conçue pour
- détecter la position dans l'espace de la partie des yeux (314) de la personne (316) par rapport à la position de la caméra (302) et,
- dans le cas où la position dans l'espace de la partie des yeux (314) ne se trouve pas dans une zone prédéfinie par rapport à la position de la caméra (302), démarrer l'unité d'entraînement afin de déplacer automatiquement la hauteur de la caméra (302) par le biais de l'unité d'entraînement de sorte que la position dans l'espace de la partie des yeux se trouve dans la zone prédéfinie par rapport à la position de la caméra (302).

8. Dispositif (100) selon l'une des revendications précédentes, dans lequel la caméra (302) est conçue pour la détection de la lumière infrarouge, où l'unité de commande (320) est en outre conçue pour
- la prise d'une cinquième image du visage de la personne (316) par la caméra (302), sans l'éclairage du visage de la personne (316) par le dispositif d'éclairage (306), où la prise de la cinquième image a lieu dans la région des longueurs d'onde infrarouges,
- le calcul des contours externes du visage à partir de la cinquième image,
- la correction de la première image différentielle (334) avec les contours externes calculés à partir de la cinquième image.

9. Dispositif (100) selon l'une des revendications précédentes, où le dispositif (100) présente un lecteur (108) pour un document d'identité de la personne (316), où le lecteur (108) est conçu pour, à l'état activé, lire des informations de personnalisation de la personne (316) à partir du document d'identité, où les données spécifiques à une personne comprennent les informations de personnalisation.

10. Dispositif (100) selon l'une des revendications précédentes, avec en outre un capteur d'empreintes digitales (114), où le capteur d'empreintes digitales (114) est conçu pour, à l'état activé, détecter une empreinte digitale de la personne (316), où les données spécifiques à une personne comprennent l'empreinte digitale détectée.

11. Dispositif (100) selon la revendication 8 ou 9, dans lequel l'unité de commande (320) est en outre conçue pour placer à l'état activé le lecteur (108) et/ou le capteur d'empreintes digitales (114), et/ou le tableau d'actionnement (110), exclusivement et au plus aussi longtemps qu'une image faciale de la personne (316) est prise par la caméra (302).

12. Dispositif (100) selon l'une des revendications précédentes, avec en outre une interface de réseau, où le dispositif (100) est conçu pour transmettre les données spécifiques à une personne à un dispositif pour l'exécution automatisée d'un document d'identité à partir des données spécifiques à une personne ou vers un dispositif pour la vérification des données spécifiques à une personne.

13. Procédé mis en oeuvre par ordinateur pour l'acquisition de données spécifiques à une personne d'une personne (316) par un dispositif (100), où les données spécifiques à une personne comprennent une image faciale de la personne (316), où le dispositif (100) présente une caméra (302) pour la prise de l'image faciale de la personne (316), un dispositif d'éclairage (306) et un miroir (120) semi transparent, où le miroir (120) semi transparent est disposé entre la personne (316) et la caméra (302), où le miroir (120) semi transparent est orienté de telle manière que, sur le côté orienté vers la personne (316) du miroir (120) semi transparent, la trajectoire du rayonnement de la lumière tombant sur le miroir (120) semi transparent est parallèle à la trajectoire du rayonnement de la partie réfléchie en retour de cette lumière par le miroir (120) semi transparent, où le dispositif d'éclairage (306) est conçu pour un éclairage frontal de la personne (316), où le procédé comprend :
- la génération de lumière blanche par le dispositif d'éclairage (306) pour l'éclairage du visage de la personne (316) et pendant l'éclairage, la prise d'une première image (328) du visage de la personne (316) par la caméra (302),
**caractérisé par** :
- la prise d'une deuxième image du visage de la personne (316) par la caméra (302) sans génération de la lumière blanche,
- la formation d'une première image différentielle (334) de la première image (328) et de la deuxième image, où, dans la première image différentielle, le visage (332) de la personne (316) est disposé de manière libre dans l'arrière plan (330), où les données spécifiques à une personne comprennent la première image différentielle (334) en tant qu'image faciale,
- la commande du dispositif d'éclairage (306) pour la génération d'une lumière colorée ou infrarouge par le dispositif d'éclairage (306) pour l'éclairage du visage de la personne (316), ainsi que la commande de la caméra (302) afin de prendre une troisième image du visage de la personne (316) par la caméra (302) pendant l'éclairage,
- la prise d'une quatrième image du visage de la personne (316) par la caméra (302) sans la génération de la lumière colorée ou infrarouge,
- la formation d'une deuxième image différentielle de la troisième image et de la quatrième image, où, dans la deuxième image différentielle, le visage (332) de la personne (316) est disposé de manière libre par rapport à l'arrière plan (330), et le calcul des contours extérieurs du visage à partir de la deuxième image différentielle,
- la correction de la première image différentielle (334) avec les contours extérieurs calculés à partir de la deuxième image différentielle.

14. Produit de programme informatique avec des instructions exécutables par un processeur qui, lors de l'exécution du programme par un ordinateur, font en sorte que celui-ci exécute les étapes de procédé selon la revendication 13.

15. Suite de signaux qui représente une suite d'instructions qui, lorsqu'elle stockée dans un ordinateur, exécute, lorsqu'elle est exécutée sur cet ordinateur, le procédé selon la revendication 13.
